# EUROPEAN PATENT SPECIFICATION

(11) **EP 3 147 975 B1**
(45) Date of publication and mention of the grant of the patent: **07.07.2021**
(21) Application number: 15795693.9
(22) Date of filing: 22.05.2015
(51) Int. Cl.: H01M 4/58, H01M 4/36, H01M 4/62, H01M 4/66

(54) **POSITIVE ELECTRODE MATERIAL, SECONDARY BATTERY, METHOD FOR MANUFACTURING POSITIVE ELECTRODE MATERIAL, AND METHOD FOR MANUFACTURING SECONDARY BATTERY**
POSITIVES ELEKTRODENMATERIAL, SEKUNDÄRBATTERIE, VERFAHREN ZUR HERSTELLUNG EINES POSITIVEN ELEKTRODENMATERIALS UND VERFAHREN ZUR HERSTELLUNG EINER SEKUNDÄRBATTERIE
MATIÈRE D'ÉLECTRODE POSITIVE, BATTERIE RECHARGEABLE, PROCÉDÉ DE FABRICATION DE MATIÈRE D'ÉLECTRODE POSITIVE, ET PROCÉDÉ DE FABRICATION DE BATTERIE RECHARGEABLE

(30) Priority: 23.05.2014 JP 2014107342
(43) Date of publication of application: 29.03.2017
(73) Proprietor: Nippon Chemi-Con Corporation, Tokyo 141-8605 (JP)
(72) Inventor: NAOI Katsuhiko, Fuchu-shi Tokyo 183-8538 (JP)
(74) Representative: Michalski Hüttermann & Partner Patentanwälte mbB
(86) International application number: PCT/JP2015/064730
(87) International publication number: WO 2015/178479

(56) References cited:
- WO-A1-2013/073561
- JP-A- 2000 086 215
- JP-A- 2011 529 257
- JP-A- 2012 036 050
- JP-A- 2013 077 377
- JP-A- 2013 206 748
- J. BARKER ET AL: "The Effect of Al Substitution on the Electrochemical Insertion Properties of the Lithium Vanadium Phosphate, Li[sub 3]V[sub 2](PO[sub 4])[sub 3]", JOURNAL OF THE ELECTROCHEMICAL SOCIETY, vol. 154, no. 4, 15 February 2007 (2007-02-15), page A307, XP055359579, US ISSN: 0013-4651, DOI: 10.1149/1.2437072
- ROBIN VON HAGEN ET AL: "Influence of electrode design on the electrochemical performance of Li3V2(PO4)3/C nanocomposite cathode in lithium ion batteries", NANO ENERGY, vol. 2, no. 2, 7 November 2012 (2012-11-07), pages 304-313, XP055238266, ISSN: 2211-2855, DOI: 10.1016/j.nanoen.2012.10.002
- QIAO Y Q ET AL: "Enhanced electrochemical performances of multi-walled carbon nanotubes modified LiV(PO)/C cathode material for lithium-ion batteries", JOURNAL OF ALLOYS AND COMPOUNDS, ELSEVIER SEQUOIA, LAUSANNE, CH, vol. 509, no. 25, 7 April 2011 (2011-04-07), pages 7181-7185, XP028215960, ISSN: 0925-8388, DOI: 10.1016/J.JALLCOM.2011.04.048 [retrieved on 2011-04-15]
- Y .Q. QIAO ET AL.: 'Enhanced electrochemical performances of multi-walled carbon nanotubes modified Li3V2(PO4)3/C cathode material for lithium-ion batteries' JOURNAL OF ALLOYS AND COMPOUNDS vol. 509, no. ISS.25, 15 April 2011, pages 7181 - 7185, XP028215960
- ROBIN VON HAGEN ET AL.: 'Influence of electrode design on the electrochemical performance of Li3V2(P04)3/C nanocomposite cathode in lithium ion batteries' NANO ENERGY vol. 2, no. ISS.2, 07 November 2012, pages 304 - 313, XP055238266
- ZHANG BAO ET AL.: 'Electrochemical performance of Al-substituted Li3V2 (PO4)3 cathode materials synthesized by sol-gel method' TRANSACTIONS OF NONFERROUS METALS SOCIETY OF CHINA vol. 20, no. ISS.4, 05 May 2010, pages 619 - 623, XP027045420
- None

## Description

### BACKGROUND

### 1. TECHNICAL FIELD

The present invention relates to cathode material, a secondary battery, a cathode material manufacturing method, and a secondary battery manufacturing method.

### 2. RELATED ART

A composite body of conductive carbon material and lithium vanadium phosphate (Li₃V₂(PO₄)₃) including an Na super ionic conductor is known to be used as electrode material of a power storage device such as a secondary battery or electrochemical capacitor, as shown in Non-Patent Documents 1 to 3.
Non-Patent Document 1: X. Rui, et al., J. Power Sources, 214, 171 (2012)
Non-Patent Document 2: L. Zhang, et al., J. Power Sources, 203, 121 (2012)
Non-Patent Document 3: A. Pan, et al., "Nano-structures Li3V2(PO4)3/carbon composite for high-rate lithium-ion batteries," Electrochemistry Communications, 12, 1674-1677 (2010).
Non-Patent Document 4: J. Barker, et al., "The Effect of Al Substitution on the Electrochemical Insertion Properties of the Lithium Vanadium Phosphate, Li3V2(PO4)3", Journal of the Electrochemical Society, vol. 154, no.4, 15 February 2007.

However, although a conventional composite body of lithium vanadium phosphate and conductive carbon material exhibits a favorable discharge capacity when the discharge rate is less than 80 C, there is a problem that this composite body has a low discharge capacity when the discharge rate is 80 C or higher.

### SUMMARY

The invention is defined by the features of the independent claims. Preferred embodiments are defined by the features of the dependent claims.

According to a first aspect of the present invention, provided is cathode material comprising lithium vanadium phosphate including vanadium with a valence that changes between 3 and 5 due to removal and insertion of lithium ions and conductive carbon material. The lithium vanadium phosphate is bonded to a surface of the conductive carbon material, and 90% or more of the lithium vanadium phosphate by total weight is particle-shaped crystals with diameters from 10 nm to 200 nm.

According to a second aspect of the present invention, provided is a cathode material manufacturing method comprising: a first process including a step of applying shearing stress and centrifugal force inside a spinning reaction container to an aqueous solution of a mixture including a vanadium source, conductive carbon material, an organic compound having a plurality of carboxyl groups, and alcohol having a plurality of hydrogen groups, to bond vanadium oxide to a surface of the conductive carbon material; and a second process including a step of adding a phosphate source and a lithium source to the mixture and applying shearing stress and centrifugal force to the mixture inside the spinning reaction container, to produce lithium vanadium phosphate with particle shapes bonded to the surface of the conductive carbon material.

The summary clause does not necessarily describe all necessary features of the embodiments of the present invention. The present invention may also be a sub-combination of the features described above.

### BRIEF DESCRIPTION OF THE DRAWINGS

Fig. 1 is a cross-sectional view schematically showing a lithium secondary battery 10 including a cathode material in a cathode thereof, according to an embodiment of the present invention.
Fig. 2 is a partial cross-sectional view of the reaction container used in the UC process.
Fig. 3 is a flow chart showing the manufacturing procedure of a first process of the lithium vanadium phosphate composite body with the aluminum as a solid solution.
Fig. 4 is a flow chart showing the manufacturing procedure of a second process of the lithium vanadium phosphate composite body with aluminum as a solid solution.
Fig. 5 shows an XRD profile of the vanadium oxide composite body with aluminum as a solid solution.
Fig. 6 shows EDX surface analysis results of the lithium vanadium phosphate with aluminum as a solid solution.
Fig. 7 is an HRTEM image of the lithium vanadium phosphate composite body with aluminum as a solid solution bonded to the CNF surface.
Fig. 8 shows an HRTEM image of the lithium vanadium phosphate and a particle size distribution.
Fig. 9 is a graph showing the charging/discharging characteristic of the cathode material including the lithium vanadium phosphate composite body with aluminum as a solid solution.
Fig. 10 shows a first process in a manufacturing method of a lithium vanadium phosphate composite body of the first reference example using an alkali clumping precipitation technique.
Fig. 11 shows a second process in the manufacturing method of a lithium vanadium phosphate composite body of the first reference example using the alkali clumping precipitation technique.
Fig. 12 is an HRTEM image showing the entire image of the lithium vanadium phosphate manufactured using the alkali clumping precipitation technique.
Fig. 13 is an HRTEM image showing an enlarged portion of the lithium vanadium phosphate manufactured using the alkali clumping precipitation technique.
Fig. 14 shows the discharge rate characteristics.
Fig. 15 is a schematic view of a crystal structure of the lithium vanadium phosphate with aluminum as a solid solution.
Fig. 16 is a table showing lattice parameter change of the cathode material before and after charging/discharging and change in volume calculated from these lattice parameters.
Fig. 17 is a graph showing a discharge cycle characteristic.
Fig. 18 shows charging/discharging characteristics of the cathode material including the lithium vanadium phosphate composite body.
Fig. 19 shows charge rate characteristics
Fig. 20 shows discharge rate characteristics
Fig. 21 shows discharge cycle characteristics
Fig. 22 is a flow chart showing the manufacturing procedure of a first process of the lithium vanadium phosphate composite body with the gallium or indium as a solid solution.
Fig. 23 shows charging/discharging characteristics.
Fig. 24 shows discharge rate characteristics.
Fig. 25 shows charge rate characteristics.
Fig. 26 is a drawing for describing the ion radius of the metal ions.
Fig. 27 is a graph showing a theoretical capacity of the lithium vanadium phosphate with aluminum as a solid solution.
Fig. 28 is an HRTEM image of a lithium vanadium phosphate composite body in which the aluminum is not a solid solution, manufactured using the Pechini method.
Fig. 29 shows the discharge cycle characteristic.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

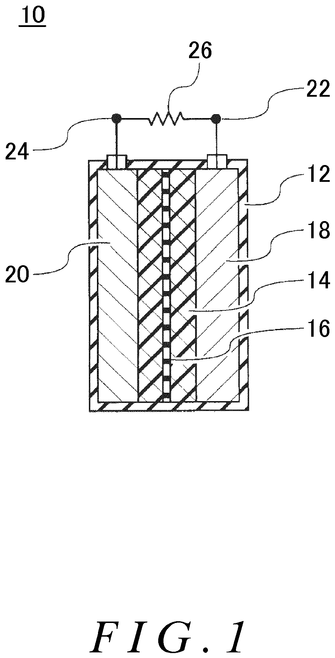

Fig. 1 is a cross-sectional view schematically showing a lithium secondary battery 10 including a cathode material in a cathode thereof, according to an embodiment of the present invention. The lithium secondary battery 10 includes a battery case 12, an ion conductor 14, a separator 16, a cathode 18, and an anode 20. In the lithium secondary battery 10, the cathode 18 and the anode 20 are layered in a manner to sandwich the ion conductor 14. The cathode 18 and the anode 20 are inserted into the battery case 12 in a dry air or dry inert gas atmosphere in which the dew point temperature is managed. Then, a load 26 is connected to a cathode terminal 22 connected to the cathode 18 and an anode terminal 24 connected to the anode and the battery case 12 is sealed, thereby assembling the lithium secondary battery 10.

The cathode material according to the present embodiment includes a conductive carbon material and lithium vanadium phosphate, which includes aluminum and vanadium whose valence is changed between 3 and 5 through the removal and insertion of lithium ions, and the aluminum forms a solid solution in the vanadium phosphate. The lithium vanadium phosphate including the aluminum is bonded to the surface of the conductive carbon material, and 90% or more of the total weight of the lithium vanadium phosphate including the aluminum is particle-shaped crystals with a particle size from 10 nm to 200 nm.

Here, the solid solution is a state in which aluminum atoms are included in place of vanadium atoms in the vanadium oxide crystal structure. In other words, the solid solution state includes two identical crystal structures of Li₃V₂(PO₄)₃ and Li₃Al₂(PO₄)₃, but the mixture ratio therebetween is 1.8:0.2 (= 9:1), for example. Furthermore, bonding refers to a state in which the lithium vanadium phosphate including the aluminum is not merely physically attached to the surface of the conductive carbon material, but is also electrically bonded to the conductive carbon material with high conductivity therebetween. For example, this bonding refers to a state where the lithium vanadium phosphate is bonded to the surface of the conductive carbon material by its atomic level. Lithium vanadium phosphate in which most of the aluminum forms a solid solution is preferably bonded on the surface of the conductive carbon material, but it is not necessary for lithium vanadium phosphate in which all of the aluminum forms a solid solution to be bonded on the surface of the conductive carbon material.

A high discharge capacity characteristic even when the C rate is high is achieved by bonding the lithium vanadium phosphate with aluminum as a solid solution to the surface of the conductive carbon material, and a high discharge capacity characteristic is achieved by forming the lithium vanadium phosphate with aluminum as a solid solution such that 90% or more of the total weight thereof is particle-shaped crystal bodies with particle sizes from 10 nm to 200 nm. An even higher discharge capacity characteristic is achieved by forming the lithium vanadium phosphate with aluminum as a solid solution such that 90% or more of the total weight thereof is particle-shaped crystal bodies with particle sizes from 10 nm to 100 nm.

Aluminum is an example of a metal that has the same valence as vanadium and whose valence does not change through the removal and insertion of lithium ions. The metal that has the same valence as the vanadium and whose valence does not change through the removal and insertion of lithium ions may be gallium and indium, and this metal may be one type of metal selected from among aluminum, gallium, and indium.

In the cathode material in the present embodiment, a mixture including a lithium source, a vanadium source, an aluminum source, and a phosphorous source undergoes nanochemical processing using a reactive container or the like that spins. In this way, the formation of nanoparticles in the lithium vanadium phosphate precursor and the bonding with the conductive carbon material are encouraged. Here, the nanochemical processing is a process of applying mechanical energy such as shearing stress and centrifugal force using the reaction container or the like that spins. The nanochemical process need only be able to add shearing stress, centrifugal force, or some other mechanical energy through an ultra-centrifugal force processing method (sometimes referred to hereinafter as a "UC process"). Essentially, it is only necessary to be able to attach the vanadium compound including the aluminum on the conductive carbon material and generate the lithium vanadium phosphate precursor on the surface of the conductive carbon material, by using mechanical energy. The nanochemical process also serves as a micronizing process and a high dispersion process for the lithium source, the vanadium source, the aluminum source, the phosphorous source, and the conductive carbon material.

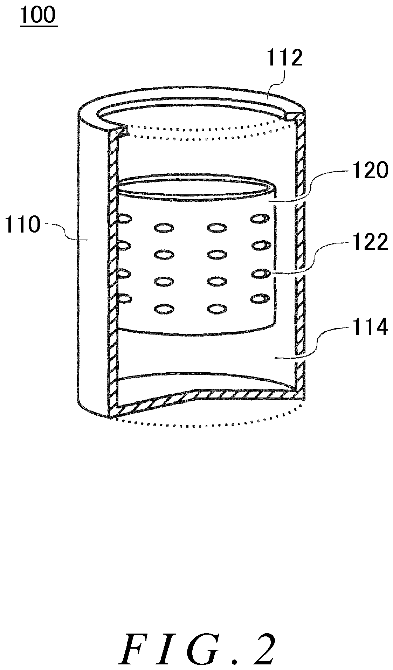

Fig. 2 is a partial cross-sectional view of the reaction container used in the UC process. The reaction vessel 100 shown in Fig. 2 is formed by including an outer tube 110 having a sheathing board 112 at an open portion thereof, and an inner tube 120 that includes through-holes 122 and spins. A reactant is introduced inside the inner tube 120 of this reaction vessel 100.

The introduced reactant collides with an inner wall 114 of the outer tube 110 through the through-holes 122 in the inner tube 120, due to the centrifugal force generated by the spinning of the inner tube 120. As a result of these collisions, the reactant is forced up to an upper portion of the inner wall 114 to form a thin film. In this state, both a shearing force between the inner wall 114 and the reactant and the centrifugal force from the inner tube 120 are applied simultaneously to the reactant. In other words, a large amount of mechanical energy is applied to the reactant by the reaction vessel 100. The mechanical energy can be thought of as being converted into the chemical energy needed for the reaction, which is so-called activation energy. In this way, the reaction progresses in a short time. In order to provide the reactant with enough mechanical energy, a centrifugal force greater than or equal to 1500 N(kgms⁻²) is preferably generated, and a centrifugal force greater than or equal to 60000 N(kgms⁻²) is more preferably generated.

The UC process is divided into two processes when performed. In the first UC process, the shearing stress and the centrifugal force are applied to the vanadium source, the aluminum source, and the conductive carbon material, and the vanadium source and aluminum source are attached to the conductive carbon material. In the second UC process, the shearing stress and the centrifugal force are applied to the lithium source, the phosphate source, and the vanadium with aluminum as a solid solution formed on the surface of the conductive carbon material, thereby enabling generation of the lithium vanadium phosphate, with the base vanadium including the aluminum as a solid solution as an origin point.

The cathode material according to the present embodiment is diffused in particle form using the Pechini method, to obtain the vanadium oxide composite body with the aluminum solid solution bonded to the surface of the conductive carbon material. The manufacturing method thereof includes performing mixing such that the number of moles of aluminum in the aluminum source is in a range from greater than 0 to less than or equal to 0.33 for every 1 mole of vanadium in the vanadium source. Water is added to this mixture to form an aqueous solution including vanadium ions and aluminum ions, and an organic compound having a plurality of carboxyl groups is added to the mixture to form a metal complex. Polymerization is performed due to an ester reaction between this metal complex and alcohol having a plurality of hydrogen groups. By performing a first process that includes adding the conductive carbon material to this mixture and then performing the UC process, drying, and sintering on this mixture, the mixture is dispersed in particle form and the vanadium oxide composite body with the aluminum solid solution bonded on the surface of the conductive carbon material is obtained. The reason that the vanadium oxide composite body dispersed in particle form is obtained in this manner is believed to be that the polymer formed by the polymerization reaction fulfills the role of a spacer within the metal complex, thereby keeping the metal complex in a highly dispersed state.

By performing a second process that includes performing the UC process, drying, and sintering on the mixture into which the vanadium oxide with the aluminum as a solid solution, the lithium source, and the phosphate source have been added, the lithium vanadium phosphate composite body with the aluminum as a solid solution bonded on the surface of the conductive carbon material is obtained, with 90% or more of the total weight of the lithium vanadium phosphate composite body with the aluminum as a solid solution having a particle shape with a particle size from 10 nm to 100 nm.

The vanadium source can be exemplified by NH₄VO₃, but may also be V₂O₅, V₂O₃, metal vanadium, V₂O₄, vanadium (III) acetylacetonate, and vanadium (IV) oxyacetylacetonate. The aluminum source is exemplified by Al(NO₃)₃, but may also be metal aluminum, alumina, and another inorganic acid salt or organic acid salt of aluminum.

The lithium source is exemplified by CH₃COOLi, but may also be LiNO₃, Li₂CO₃, LiOH, LiOH·H₂O, LiCl, Li₂SO₄, and LiC₃H₅O₃. The phosphorous source is exemplified by H₃PO₄, but may also be a compound containing PO₄ such as MH₄H₂PO₄, (NH₄)₂HPO₄, P₂O₅, and Li₃PO₄.

Carbon nanofiber and conductive carbon black (e.g. Ketjen black (Registered Trademark)) having a hollow shell structure are suitable for use as the conductive carbon material, but carbon nanotubes, carbon black such as acetyl black, amorphous carbon, carbon fiber, natural graphite, artificial graphite, active carbon, mesoporous carbon, or a mixture formed by a plurality of these materials can also be used.

The organic compound having a plurality of carboxyl groups is exemplified by a tricarboxylic acid citrate, but may also be a dicarboxylic acid such as oxalic acid, malonic acid, and succinic acid. The alcohol having a plurality of hydrogen groups is exemplified by ethylene glycol, but may also be another alcohol with a valence of 2 such as propylene glycol or an alcohol with a valence of 3 such as glycerin.

In this way, due to the cathode material included in the cathode 18, the lithium secondary battery 10 according to the present embodiment can realize the effects of having a favorable discharge capacity and, in particular, having excellent durability and a high discharge capacity characteristic at a high C rate. The cathode including the cathode material of the present embodiment is described as being used as the cathode of a lithium secondary battery, but the cathode material of the present embodiment can also be used in an electrode of a capacitor.

### (First Embodiment Example)

In the first embodiment example, cathode material formed from a composite body of carbon nanofiber (sometimes referred to hereinafter as CNF) and lithium vanadium phosphate with aluminum as a solid solution at a molar ratio of 10% was created using the manufacturing procedure shown below.

The material sources of the lithium vanadium phosphate are ammonium metavanadate (NH₄VO₃), aluminum nitrate hydrate (Al(NO₃)₃·9H₂O), a lithium acetate (LiOAc), and phosphoric acid (H₃PO₄). The average fiber diameter of the CNF is from 10 nm to 20 nm. The weight ratio between each material source of the lithium vanadium phosphate and the CNF is 70:30.

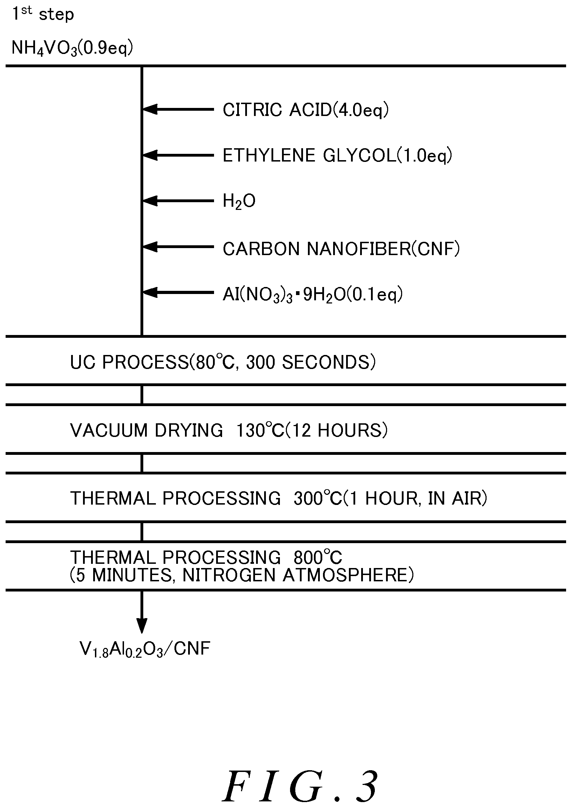

Fig. 3 is a flow chart showing the manufacturing procedure of a first process of the lithium vanadium phosphate composite body with the aluminum as a solid solution. As shown in Fig. 3, first, a mixed solvent was created by adding an equivalent weight of 0.9 of the ammonium metavanadate (NH₄VO₃), an equivalent weight of 1.0 of citric acid, and an equivalent weight of 4.0 of ethylene glycol, an equivalent weight of 0.1 of aluminum nitrate, and the CNF to distilled water (H₂O). In this way, the metal complex is formed by the citric acid and the vanadium and aluminum, and the citric acid further forms a polymer by having an ester reaction with the ethylene glycol. The polymer formed by this polymerization reaction enters into the metal complex, thereby dispersing the metal complex and keeping the metal complex in the dispersed state. The UC process was performed on this mixture in an environment with a temperature of 80°C, using the reaction vessel shown in Fig. 2. The UC process included rotating the inner tube 120 with a rotational speed of 50 m/s to apply a centrifugal force of 66000 N(kgms⁻²) to the mixture over a period of 5 minutes. In this UC process, fine particle formation and high dispersion of the metal complex, dissolution of the CNF, and bonding of the metal complex to the CNF surface are encouraged.

After impurities were filtered from the mixed solution and vacuum drying was performed at 130°C, thermal processing was performed for 1 hour at 300°C. As a result of this thermal processing at 300°C, the citric acid, the ethylene glycol, and the polymer formed by the esterification between the citric acid and the ethylene glycol were removed. After this, sintering was performed for 5 minutes at 800°C in a nitrogen atmosphere. With this sintering, the aluminum and the vanadium are oxidized without clumping together. In this way, bonding to the CNF surface is achieved to form vanadium oxide with aluminum as a solid solution (V_{1.8}Al_{0.2}O₃). This is the first process.

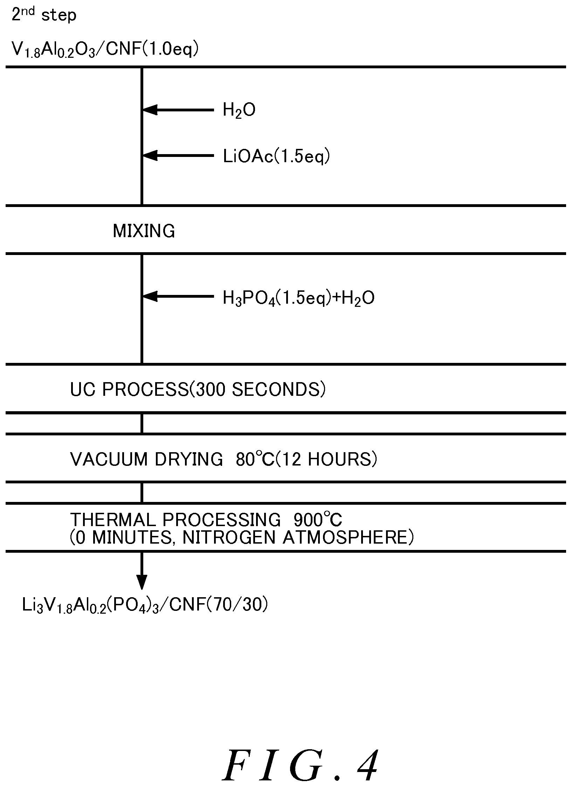

Fig. 4 is a flow chart showing the manufacturing procedure of a second process of the lithium vanadium phosphate composite body with aluminum as a solid solution. As shown in Fig. 4, an equivalent weight of 1.5 of lithium acetate (LiOAc) and distilled water was added to and mixed with a solution containing an equivalent weight of 1.0 of the composite body including the CNF and the vanadium oxide with aluminum as a solid solution (V_{1.8}Al_{0.2}O₃), and then an equivalent weight of 1.5 of phosphate (H₃PO₄) and distilled water was added and the UC process was performed for 5 minutes with a rotational speed of 50 m/s. In this process, lithium acetate and phosphate are believed to be the materials attached to the vanadium oxide with aluminum as a solid solution (V_{1.8}Al_{0.2}O₃) bonded to the surface of the CNF.

Next, the obtained mixed solution was vacuum dried for 12 hours at 80°C in a vacuum, and was then sintered for 0 minutes at 900°C in a nitrogen atmosphere. In this sintering process, the temperature is raised from room temperature to 900°C over the course of 3 minutes, and then allowed to cool naturally. In this way, due to the sudden heating, it is believed to be possible to prevent clumping of the lithium vanadium phosphate and to maintain a small particle size for the nanoparticles. The sudden heating is preferably performed in an atmosphere where the oxygen concentration has a low value of approximately 1000 ppm. In this way, it is possible to prevent oxidization of the CNF. As a result of this sintering, crystallization of the lithium vanadium phosphate with aluminum as a solid solution progresses, and a composite body powder is obtained in which nanoparticles of the lithium vanadium phosphate with aluminum as a solid solution (Li₃V_{1.8}Al_{0.2}(PO₄)₃) is carried by the CNF. This is the second process.

The amount of the aluminum solid solution is determined by the mixture ratio between the ammonium metavanadate and the aluminum nitrate in the mixed solution used in the first process. In other words, in the example shown in Fig. 3, an equivalent weight of 0.1 of the aluminum nitrate is mixed with an equivalent weight of 0.9 of the ammonium metavanadate, and therefore V_{1.8}Al_{0.2}O₃ is produced. Accordingly, when an equivalent weight of 0.05 of the aluminum nitrate is mixed with an equivalent weight of 0.95 of the ammonium metavanadate, V_{1.9}Al_{0.1}O₃ is produced. Then, by performing the second process using this V_{1.9}Al_{0.1}O₃, a composite body powder is obtained in which Li₃V_{1.9}Al_{0.1}(PO₄)₃ is carried by the CNF.

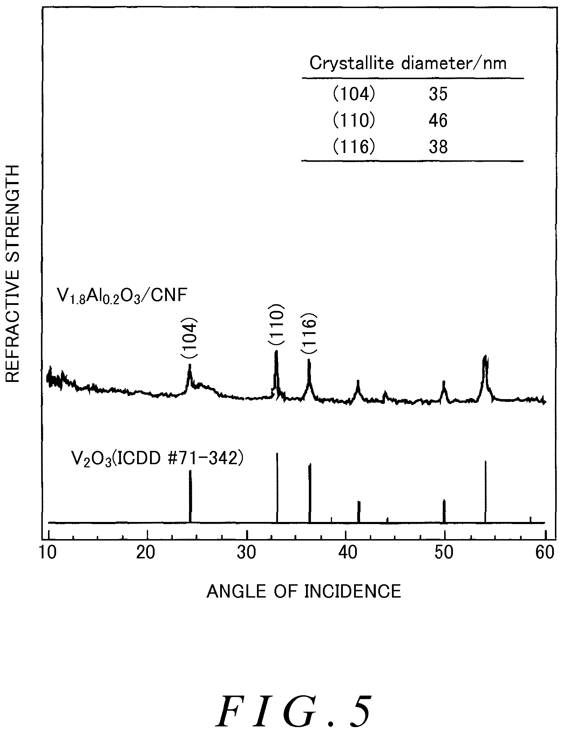

Fig. 5 shows an XRD profile of the vanadium oxide composite body with aluminum as a solid solution obtained through the first process. As shown in Fig. 5, in the XRD profile of the vanadium oxide composite body with aluminum as a solid solution, a peak is observed at the same position as in the XRD profile of vanadium oxide (V₂O₃) of ICDD, and it is confirmed that, as a result of the first process, the vanadium oxide with aluminum as a solid solution (V_{1.8}Al_{0.2}O₃) has the same crystal structure as the vanadium oxide (V₂O₃), and impurities are not formed.

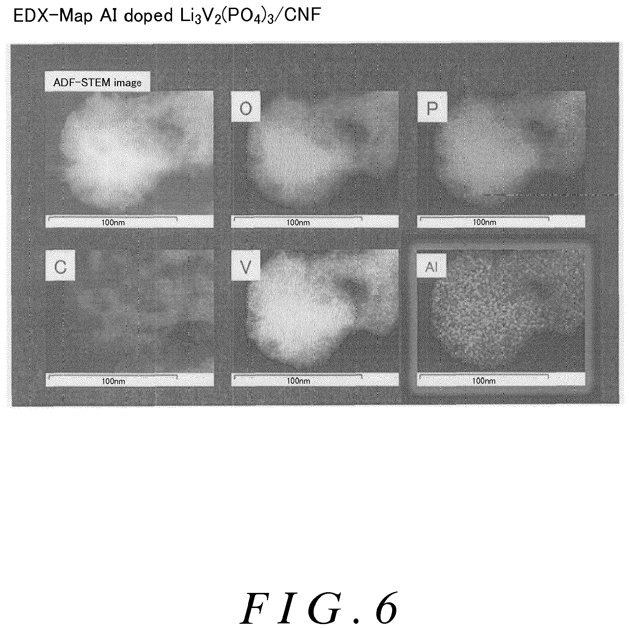

Fig. 6 shows EDX surface analysis results of the lithium vanadium phosphate with aluminum as a solid solution obtained through the second process. In Fig. 6, the colored regions in the image indicate the distribution state of O, P, C, V, and Al. From Fig. 6, it can be observed that O, P, and V indicating the lithium vanadium phosphate are dispersed in the same manner as the Al. In this way, in the lithium vanadium phosphate with aluminum as a solid solution obtained from the first process and the second process, it is understood that the aluminum is dispersed approximately uniformly without being unevenly distributed in the vanadium phosphate and forms a solid solution.

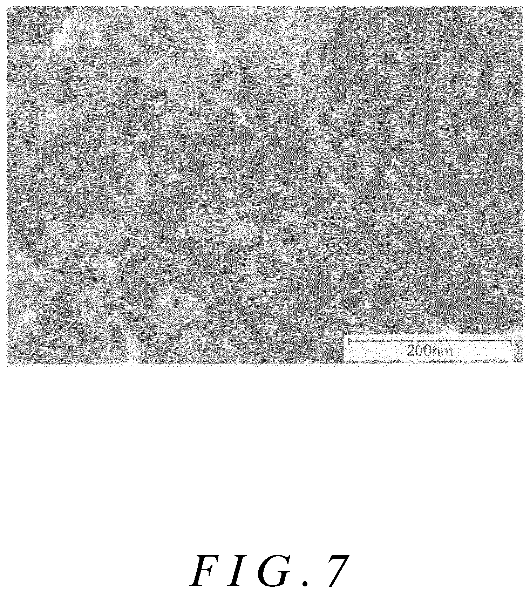

Fig. 7 is an HRTEM image of the lithium vanadium phosphate composite body with aluminum as a solid solution bonded to the CNF surface. In Fig. 7, the arrows indicate the particles of the lithium vanadium phosphate with aluminum as a solid solution, and the rod-shaped substances are the CNF. As shown in Fig. 7, it can be observed that the lithium vanadium phosphate with aluminum as a solid solution is dispersed in particle form with a particle size from 10 nm to 100 nm. Furthermore, since an image is obtained in which the particles and the CNF are focused on, it can be confirmed that the particles and the CNF are at the same height, and from this it is understood that these particles are bonded to the surface of the CNF. In this way, from Fig. 7, it is understood that the lithium vanadium phosphate with aluminum as a solid solution is in a state of being bonded to the surface of the CNF in particle form with a particle size from 10 nm to 100 nm.

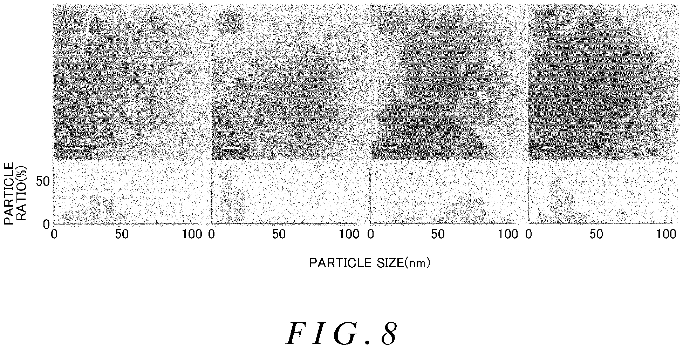

Fig. 8 shows an HRTEM image of the lithium vanadium phosphate and a particle size distribution. Fig. 8 shows an HRTEM image and a particle size distribution of each of (a) a composite body of V₂O₃/CNF, (b) a composite body of V_{1.8}Al_{0.2}O₃/CNF, (c) a composite body of Li₃V₂(PO₄)₃/CNF, and (d) a composite body of Li₃V_{1.8}Al_{0.2}(PO₄)₃/CNF. In the present embodiment, the particle size of the lithium vanadium phosphate carried by the CNF is obtained by measuring the particle size of the particles of the lithium vanadium phosphate images in the HRTEM image. Furthermore, the number of particles is also obtained by counting the number of lithium vanadium phosphate particles in this HRTEM image. The particle size distributions in Fig. 8 are created from the particle size measured from the HRTEM image and the number of particles counted in the HRTEM image.

This composite body powder was introduced into SUS mesh welded on an SUS board along with polyvinylidene fluoride PVDF serving as a binder, thereby forming a working electrode W.E. The introduction ratio for Li₃V_{1.8}Al_{0.2}(PO₄)₃:CNF:PVDF was 63:27:10, by weight. A separator and an opposite pole C.E. were provided on the working electrode W.E., along with a Li foil serving as a reference pole. An electrolyte was provided as a cell permeated with 1.0 M lithium hexafluorophosphate (LiPF₆)/ethylene carbonate (EC) and dimethyl carbonate (DEC). The ratio of LIPF₆/EC:DEC was 1:1 by weight.

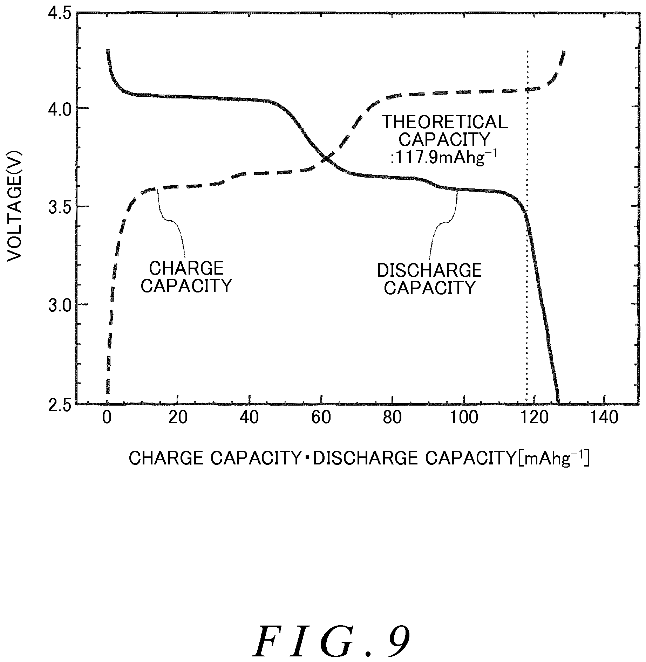

With a C.C. mode (constant current mode) set in which the discharge rate is 1 C and the working voltage of this cell is from 2.5 V to 4.3 V, the charging/discharging characteristic was examined. The C rate was calculated using a theoretical capacity of 117.9 mAhg⁻¹. Fig. 9 is a graph showing the charging/discharging characteristic of the cathode material including the lithium vanadium phosphate with aluminum as a solid solution. In Fig. 9, the horizontal axis indicates the discharge capacity and the vertical axis indicates the potential. As shown in Fig. 9, as a result of using the composite body of CNF and the lithium vanadium phosphate with aluminum as a solid solution of the first embodiment example in the electrode material, the charge capacity was 126 mAhg⁻¹, which is slightly higher than the theoretical capacity 117.9 mAhg⁻¹ calculated when the theoretical capacity is reduced by an amount corresponding to doping with aluminum, and this indicates a capacity expression rate of 107%. Furthermore, the discharge capacity was 124 mAhg⁻¹, which is slightly higher than the theoretical capacity 117.9 mAhg⁻¹, and this indicates a capacity expression rate of 105%.

### (First Reference Example)

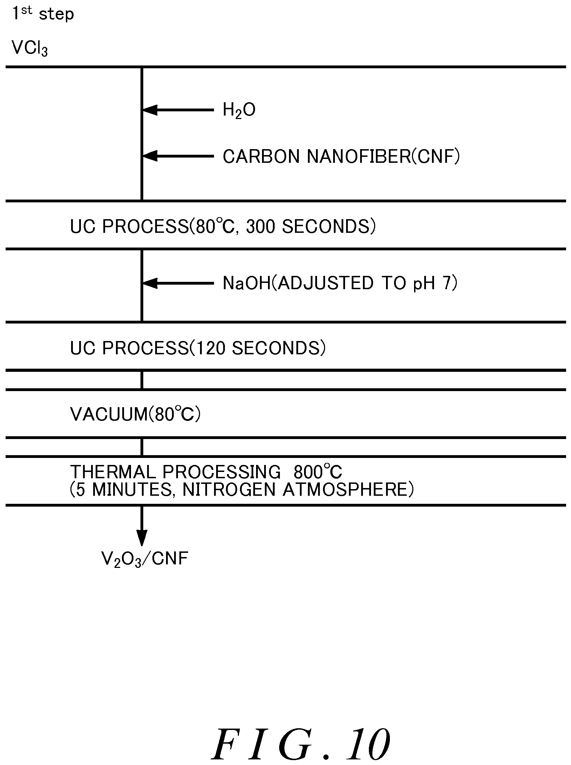

Fig. 10 shows a first process in a manufacturing method of a lithium vanadium phosphate composite body of the first reference example using an alkali clumping precipitation technique. As shown in Fig. 10, first, CNF and vanadium chloride (III) were added to distilled water (H₂O), and the UC process was performed on this mixture. Next, sodium hydroxide (NaOH) was added to adjust the mixture to have a pH of 7, thereby hydrolyzing the vanadium chloride (III) and generating vanadium hydroxide (III) (V(OH)₃). At this time, the UC process was performed for 2 minutes. The impurities were then filtered from the solution and vacuum drying was performed at 80°C, after which sintering was performed for 5 minutes at 800°C in a nitrogen atmosphere. With this sintering, a dehydration condensation reaction occurred in the vanadium hydroxide (III), and vanadium oxide (III) (V₂O₃) bonded to the surface of the CNF was formed.

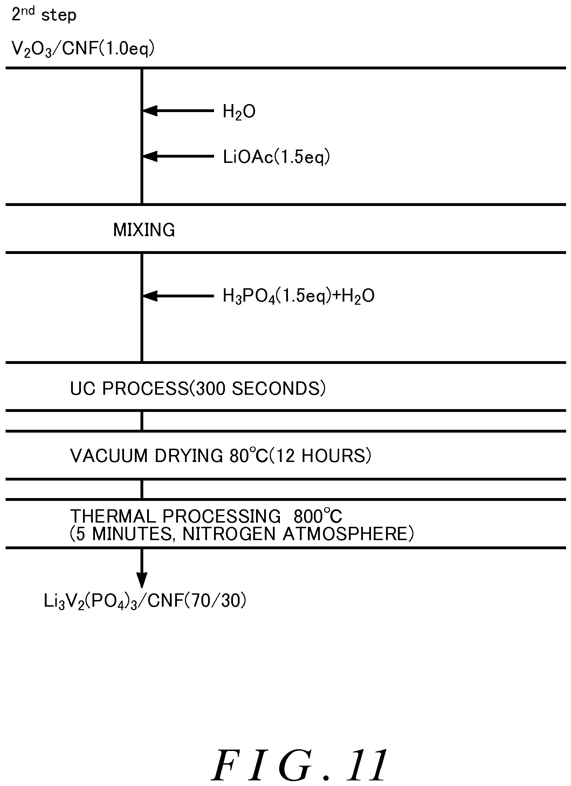

Fig. 11 shows a second process in the manufacturing method of a lithium vanadium phosphate composite body of the first reference example using the alkali clumping precipitation technique. As shown in Fig. 11, an equivalent weight of 1.5 of lithium acetate (LiOAc) and distilled water was added to and mixed with a solution containing an equivalent weight of 1.0 of the composite body including the CNF and the vanadium oxide (III) (V₂O₃), and then an equivalent weight of 1.5 of phosphate (H₃PO₄) and distilled water was added and the UC process was performed for 5 minutes. Next, the obtained mixed solution was dried overnight at 80°C in a vacuum, and was then sintered for 5 minutes at 800°C in a nitrogen atmosphere. As a result of this sintering, crystallization of the lithium vanadium phosphate progresses, and a composite body powder is obtained in which the lithium vanadium phosphate is carried by the CNF.

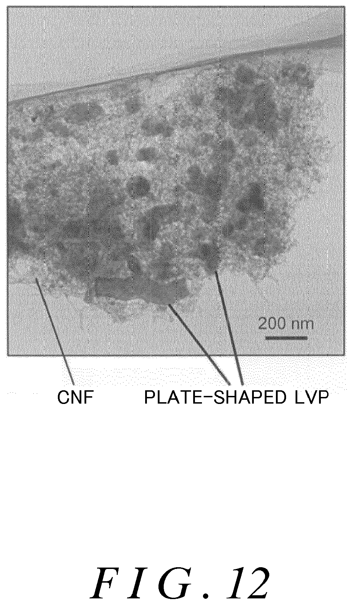

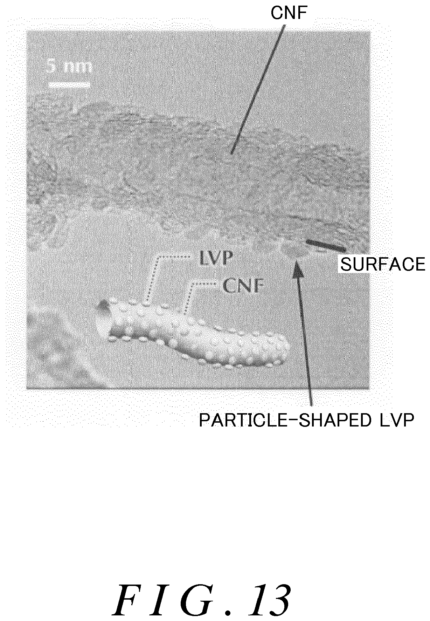

Fig. 12 is an HRTEM image showing the entire image of the lithium vanadium phosphate manufactured using the alkali clumping precipitation technique. Fig. 13 is an HRTEM image showing an enlarged portion of the lithium vanadium phosphate manufactured using the alkali clumping precipitation technique. As shown in Figs. 12 and 13, the lithium vanadium phosphate manufactured using the alkali clumping precipitation technique is a mixture of plate-shaped crystals with sizes from 50 nm to 500 nm and particle-shaped crystals with sizes from 3 nm to 6 nm bonded to the CNF.

This composite body powder was introduced into SUS mesh welded on an SUS board along with polyvinylidene fluoride PVDF serving as a binder, thereby forming a working electrode W.E. The introduction ratio for Li₃V₂(PO₄)₃:CNF:PVDF was 63:27:10, by weight. A separator and an opposite pole C.E. were provided on the working electrode W.E., along with a Li foil serving as a reference pole. An electrolyte was provided as a cell permeated with 1.0 M lithium hexafluorophosphate (LiPF₆)/ethylene carbonate (EC) and dimethyl carbonate (DEC). The ratio of LIPF₆/EC:DEC was 1:1 by weight.

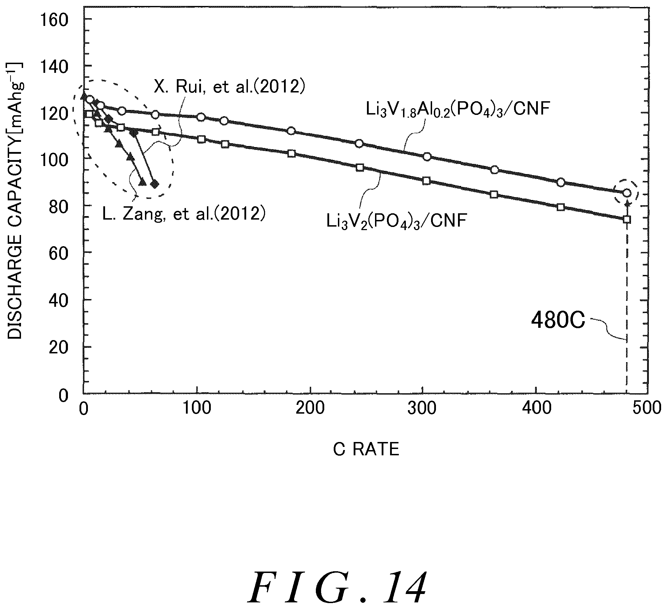

A comparison of the discharge rate characteristics was made between a cell created using the cathode material of the first embodiment example and a cell created using the cathode material of the first reference example. Fig. 14 shows the discharge rate characteristics. In Fig. 14, the horizontal axis indicates the C rate and the vertical axis indicates the discharge capacity. In order to make a comparison with a conventional example, conventional discharge rate characteristics that have been disclosed up to now are included in the graph. As shown in Fig. 14, the cathode material made of the composite body of CNF and the lithium vanadium phosphate with aluminum as a solid solution has a discharge capacity of 85 mAhg⁻¹ at a high C rate of 480 C, which is a significant improvement over the discharge capacity at the C rate disclosed in X. Rui, et al. and the discharge capacity at the C rate disclosed in L. Zhang, et al. Furthermore, the cathode material according to the reference example had a discharge capacity of 80 mAhg⁻¹ at 480 C, and the cathode material shown in the present embodiment example was able to ensure a higher discharge capacity than the first reference example.

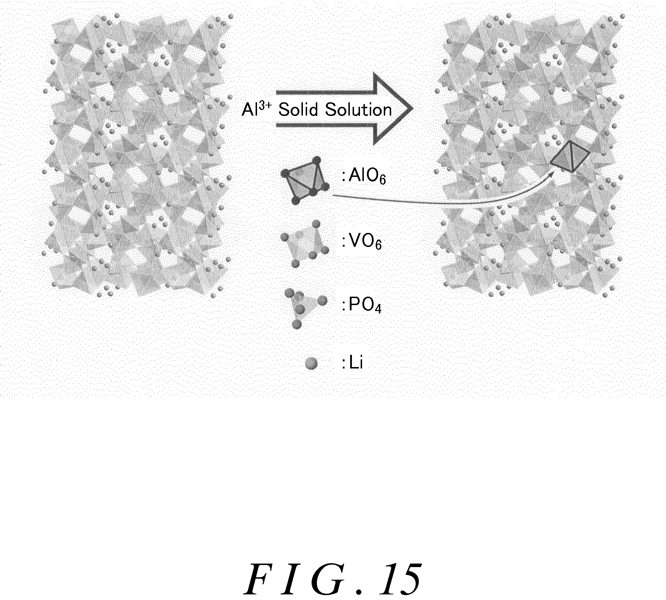

The reasons for obtaining these results were considered. Fig. 15 is a schematic view of a crystal structure of the lithium vanadium phosphate with aluminum as a solid solution. In Fig. 15, the left side of the drawing shows the crystal structure of lithium vanadium phosphate and the right side of the drawing shows the crystal structure of lithium vanadium phosphate including aluminum.

The lithium vanadium phosphate has an Na super ionic conductor structure in which an octahedron of VO₆ and a tetrahedron of PO₄ share a vertex and are arranged three-dimensionally. The lithium vanadium phosphate with aluminum as a solid solution has an Na super ionic conductor structure that is the same as that of the lithium vanadium phosphate, and includes an octahedron of AlO₆ replaced by aluminum at sites of vanadium atoms in a portion thereof.

The lithium vanadium phosphate with aluminum as a solid solution is expressed by the general formula Li₃V₍₂₋ₓ₎Alₓ(PO₄)₃, where 0 < x ≤ 0.5. When used as the cathode material of a lithium secondary battery, the valence of the vanadium changes from 3 to 4 or 5, due to the removal and insertion of lithium ions that accompanies the charging/discharging. On the other hand, the aluminum that is a solid solution is not involved in the electrochemical reaction. Therefore, even when removal and insertion of lithium ions occurs along with the charging/discharging, the valence of the aluminum remains at 3 without changing.

In the lithium vanadium phosphate crystal structure, as a result of the removal and insertion of lithium ions that accompanies the charging/discharging, it is believed that the valence of the vanadium changes and the lithium vanadium phosphate crystal structure contracts or expands. As a result of the change in volume of the crystal structure due to the removal and insertion of lithium ions, it is believed that the diffusion rate of the lithium ions decreases. As a result, a reduction in the discharge capacity at a high C rate can be assumed.

On the other hand, in the crystal structure of the lithium vanadium phosphate with aluminum as a solid solution, it is believed that the crystal structure in which aluminum atoms have replaced the atoms at the sites of vanadium atoms does not experience a change in volume, since the valence of the aluminum does not change due to the removal and insertion of lithium. In this way, it is believed that in the vanadium phosphate crystal structure including a portion that is a crystal structure that does not experience a change in volume, even when lithium ions are removed and inserted along with the charging/discharging of a secondary battery, the aluminum restricts the change in volume in other crystal structures. As a result, it can be assumed that in the lithium vanadium phosphate with aluminum as a solid solution, the diffusion rate of the lithium ions can be increased and the discharge capacity characteristic at a high C rate can be increased compared to lithium vanadium phosphate without aluminum as a solid solution.

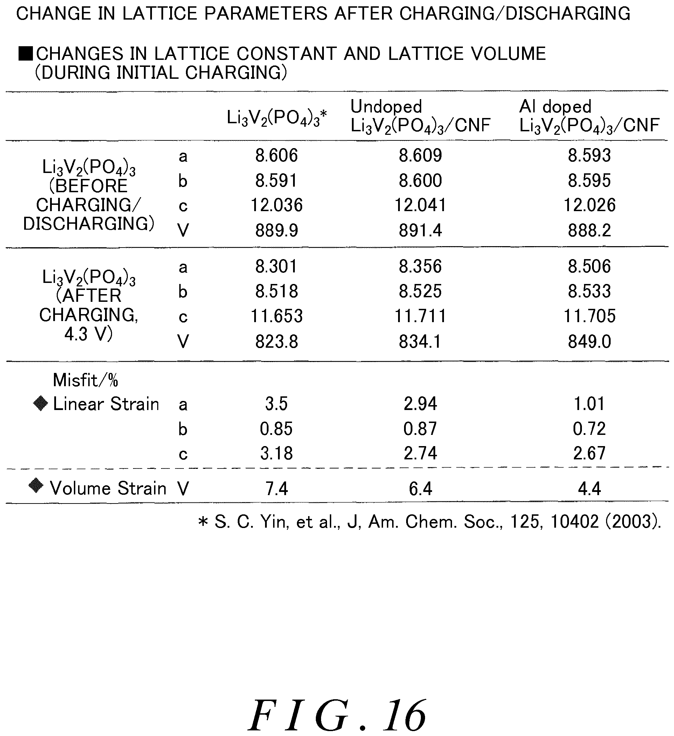

Fig. 16 is a table showing lattice parameter changes of the cathode material before and after charging/discharging and change in volume calculated from these lattice parameters. An XRD measurement of the cathode material was made before and after the charging/discharging, and upon calculating lattice parameter change and the volume change (volume strain), the volume change of the lithium vanadium phosphate of the first reference example was found to be 6.4% and the volume change of the lithium vanadium phosphate with aluminum as a solid solution was found to be 4.4%. In this way, it was confirmed that, by including the aluminum as a solid solution, it is possible to restrict the volume change of the crystal structure caused by the removal and insertion of lithium that accompanies the charging/discharging of the secondary battery.

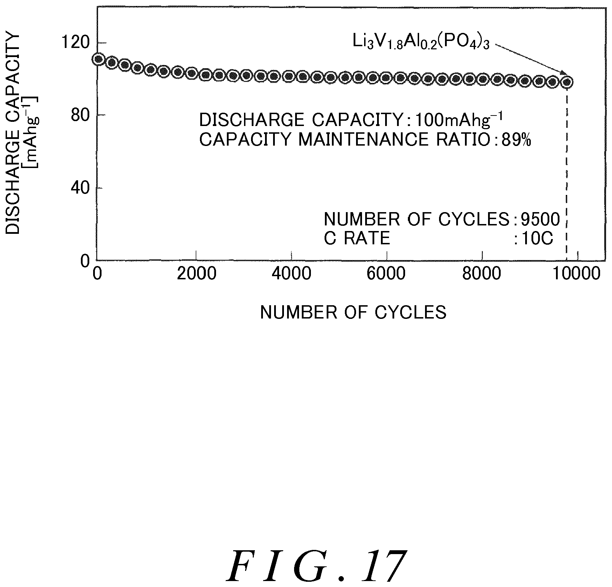

Fig. 17 is a graph showing a discharge cycle characteristic. Fig. 17 shows the discharge cycle characteristic of the cathode material including the lithium vanadium phosphate with aluminum as a solid solution. In Fig. 17, the horizontal axis indicates the number of cycles and the vertical axis indicates the discharge capacity. As shown in Fig. 17, even after charging/discharging has been performed for 9500 cycles with a discharge rate of 10 C, the cathode material including the lithium vanadium phosphate with aluminum as a solid solution maintained a discharge capacity of 100 mAhg⁻¹, indicating a capacity maintenance ratio of 89%. From this, it is understood that the cathode material including lithium vanadium phosphate has excellent durability.

### (Second Embodiment Example)

In the second embodiment example, an equivalent weight of 0.05 of aluminum nitrate was mixed with an equivalent weight of 0.95 of ammonium metavanadate, in the mixed solution used in the first process, to create cathode material made from a composite body powder of carbon nanofiber and lithium vanadium phosphate with 5% aluminum as a solid solution (LiV_{1.9}Al_{0.1}(PO₄)₃).

Using this composite body powder, a working electrode W.E and a cell were created using the same procedure as in the first embodiment example. With a C.C. mode (constant current mode) set in which the discharge rate is 1 C and the working voltage of this cell is from 2.5 V to 4.3 V, the charging/discharging characteristic was examined.

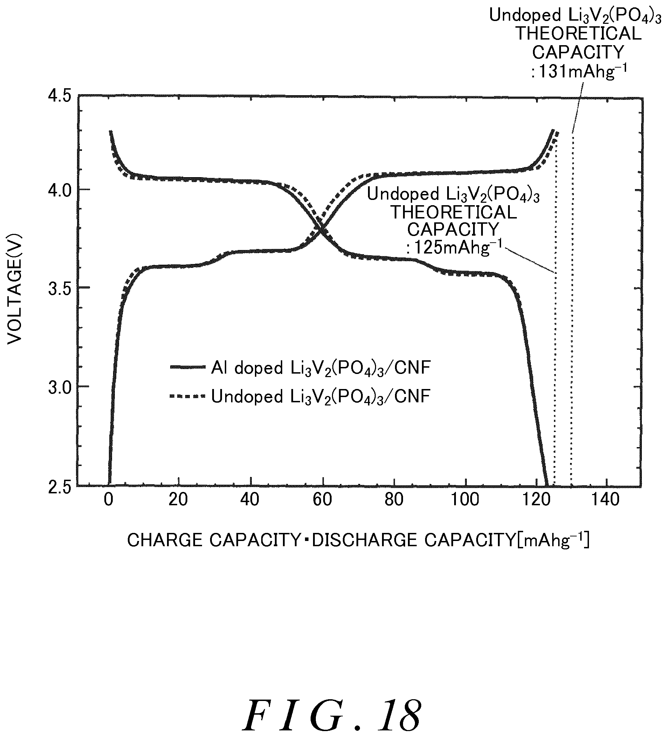

Fig. 18 shows charging/discharging characteristics of the cathode material including the lithium vanadium phosphate composite body. Fig. 18 shows the charging/discharging characteristic of a cell including the cathode material that includes the lithium vanadium phosphate with 5% aluminum as a solid solution according to the second embodiment example and the charging/discharging characteristic of a cell including the cathode material that includes the lithium vanadium phosphate according to the first reference example.

In Fig. 18, the horizontal axis indicates the discharge capacity and the vertical axis indicates the potential. The discharge capacity of the cathode material including cathode material that includes the lithium vanadium phosphate with 5% aluminum as a solid solution was 123 mAhg⁻¹, which is slightly lower than the theoretical capacity 125 mAhg⁻¹ calculated when the theoretical capacity is reduced by an amount corresponding to doping with aluminum, and this indicates a capacity expression rate of 95.2%. On the other hand, the discharge capacity of the cathode material including lithium vanadium phosphate according to the first reference example was 123 mAhg⁻¹, which is slightly lower than the theoretical capacity 131 mAhg⁻¹, and this indicates a capacity expression rate of 90.8%. In this way, the cathode material including the lithium vanadium phosphate with 5% aluminum as a solid solution exhibited a higher capacity expression rate than the cathode material including the lithium vanadium phosphate without aluminum as a solid solution.

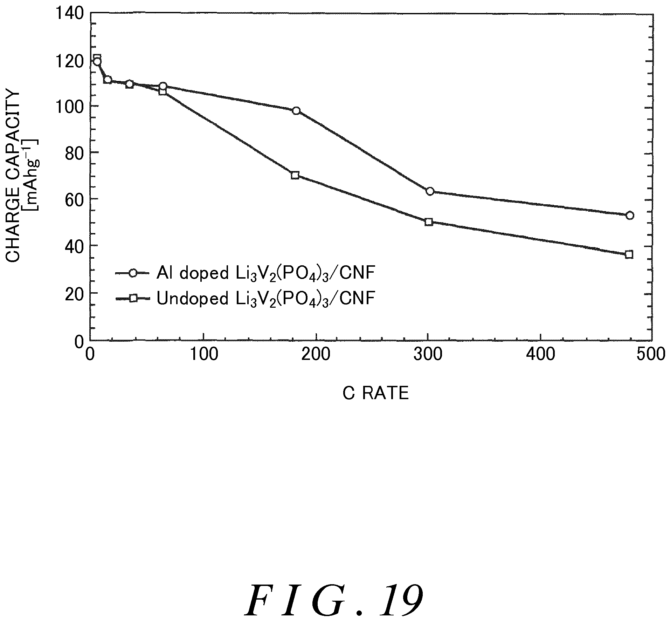

Fig. 19 shows charge rate characteristics. Fig. 19 shows the charge rate characteristic of the cathode material including the lithium vanadium phosphate with 5% aluminum as a solid solution and the charge rate characteristic of the cathode material including the lithium vanadium phosphate.

In Fig. 19, the horizontal axis indicates the C rate and the vertical axis indicates the charge capacity. As shown in Fig. 19, the cathode material including the lithium vanadium phosphate with 5% aluminum as a solid solution exhibited a higher charge capacity than the cathode material including the lithium vanadium phosphate at a high C rate from 50 C to 480 C. In this way, it is understood that the cathode material including the lithium vanadium phosphate with 5% aluminum as a solid solution can obtain a higher charge capacity characteristic at a high C rate than the cathode material including the lithium vanadium phosphate without aluminum as a solid solution.

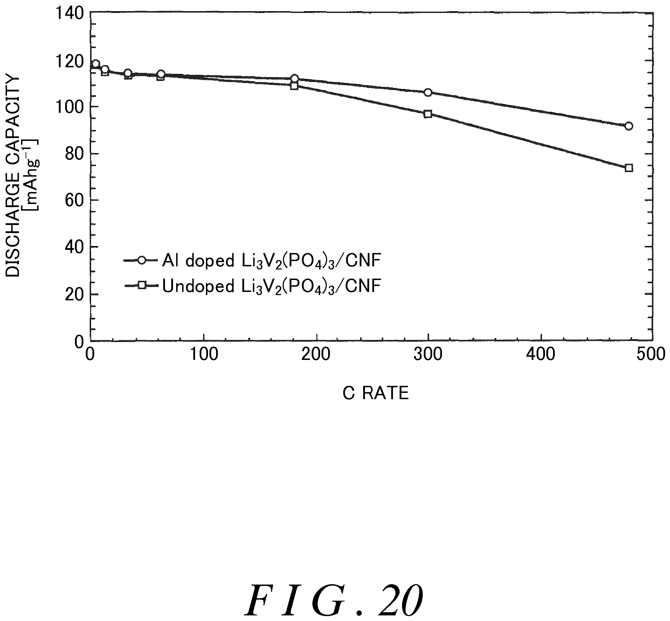

Fig. 20 shows discharge rate characteristics. Fig. 20 shows the discharge rate characteristic of the cathode material including the lithium vanadium phosphate with 5% aluminum as a solid solution and the discharge rate characteristic of the cathode material including the lithium vanadium phosphate.

In Fig. 20, the horizontal axis indicates the C rate and the vertical axis indicates the discharge capacity. As shown in Fig. 20, the cathode material including the lithium vanadium phosphate with 5% aluminum as a solid solution exhibited a higher discharge capacity than the cathode material including the lithium vanadium phosphate at a high C rate from 50 C to 480 C. In this way, it is understood that the cathode material including the lithium vanadium phosphate with 5% aluminum as a solid solution can obtain a higher discharge capacity characteristic at a high C rate than the cathode material including the lithium vanadium phosphate without aluminum as a solid solution.

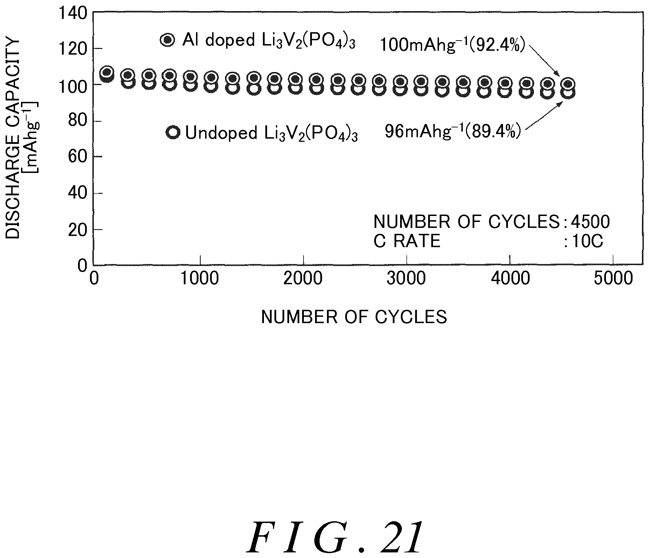

Fig. 21 shows discharge cycle characteristics. Fig. 21 shows the cycle characteristic of the cathode material including the lithium vanadium phosphate with 5% aluminum as a solid solution and the cycle characteristic of the cathode material including the lithium vanadium phosphate.

In Fig. 21, the horizontal axis indicates the number of cycles and the vertical axis indicates the discharge capacity. As shown in Fig. 21, after charging/discharging has been performed for 4500 cycles with a discharge rate of 10 C, the cathode material including the lithium vanadium phosphate with 5% aluminum as a solid solution maintained a discharge capacity of 100 mAhg⁻¹, indicating a capacity maintenance ratio of 92.4%. On the other hand, after charging/discharging has been performed for 4500 cycles with a discharge rate of 10 C, the cathode material including the lithium vanadium phosphate maintained a discharge capacity of 96 mAhg⁻¹, indicating a capacity maintenance ratio of 89.4%. In this way, it is understood that the cathode material including lithium vanadium phosphate with 5% aluminum as a solid solution has better durability than the cathode material including lithium vanadium phosphate without aluminum as a solid solution.

As described above, the cathode material including lithium vanadium phosphate with 5% aluminum as a solid solution is superior to the cathode material including lithium vanadium phosphate without aluminum as a solid solution with respect to the capacity expression rate, the charge rate characteristic, the discharge rate characteristic, and the durability. In this way, even when the amount of aluminum as a solid solution in the lithium vanadium phosphate is 5%, the aluminum can restrict volume change of the crystal structure of the vanadium phosphate due to the removal and insertion of lithium, and can stabilize the crystal structure. Therefore, the cathode material including lithium vanadium phosphate with 5% aluminum as a solid solution has an excellent capacity expression rate, charge rate characteristic, discharge rate characteristic, and durability.

### (Third Embodiment Example)

In the third embodiment example, cathode material was created from a composite body powder that includes carbon nanofiber and lithium vanadium phosphate with gallium or indium as a solid solution (LiV_{1.9}M_{0.1}O₃, where M = Ga or In), instead of aluminum, as the metal whose valence does not change due to the removal and insertion of lithium.

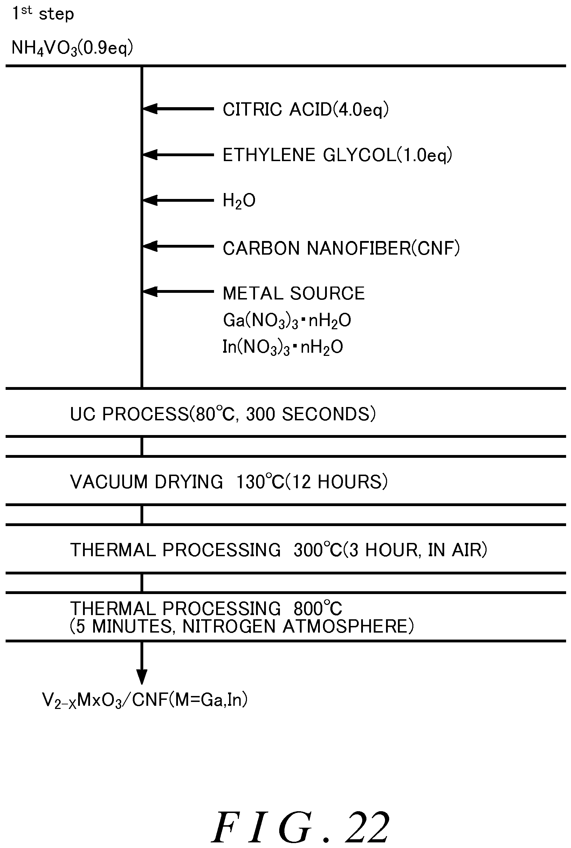

Fig. 22 is a flow chart showing the manufacturing procedure of a first process of the lithium vanadium phosphate composite body with the gallium or indium as a solid solution. As shown in Fig. 22, a mixed solvent was created by adding an equivalent weight of 0.95 of the ammonium metavanadate (NH₄VO₃), an equivalent weight of 1.0 of citric acid, an equivalent weight of 4.0 of ethylene glycol, an equivalent weight of 0.05 of gallium nitrate or an equivalent weight of 0.05 of indium nitrate, and the CNF to distilled water (H₂O). Next, the UC process was performed on the created mixture in an environment with a temperature of 80°C. The UC process included rotating the inner tube 120 with a rotational speed of 50 m/s to apply a centrifugal force of 66000 N(kgms⁻²) to the mixture over a period of 5 minutes.

After this, the impurities were filtered from the mixed solution and vacuum drying was performed at 130°C for 12 hours, after which thermal processing was performed for 3 hours at 300°C. After this, sintering was performed for 30 minutes at 800°C in a nitrogen atmosphere. In this way, bonding to the CNF surface is achieved to form vanadium oxide with indium or vanadium as a solid solution (V_{1.9}M_{0.1}O₃). The second process is the same as the process described in Fig. 4, and therefore a detailed description of the second process is omitted.

Using this composite body powder obtained from the above process, a working electrode W.E and a cell were created using the same procedure as in the first embodiment example. With a C.C. mode (constant current mode) set in which the discharge rate is 1 C and the working voltage of this cell is from 2.5 V to 4.3 V, the charging/discharging characteristic was examined.

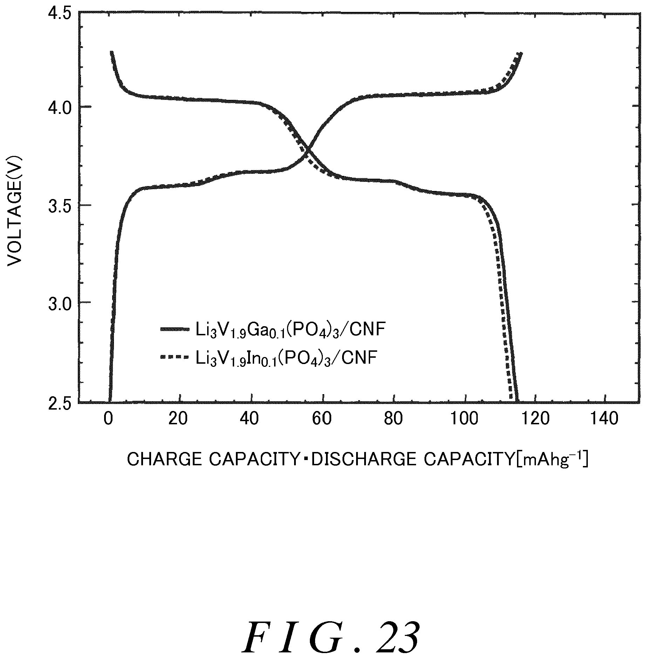

Fig. 23 shows charging/discharging characteristics. Fig. 23 shows the charging/discharging characteristic of the cathode material including the lithium vanadium phosphate with gallium as a solid solution and the charging/discharging characteristic of the cathode material including the lithium vanadium phosphate with indium as a solid solution.

In Fig. 23, the vertical axis indicates the potential and the horizontal axis indicates the discharge capacity. As shown in Fig. 23, it was confirmed that both the lithium vanadium phosphate with gallium as a solid solution and the lithium vanadium phosphate with indium as a solid solution were electrochemically active.

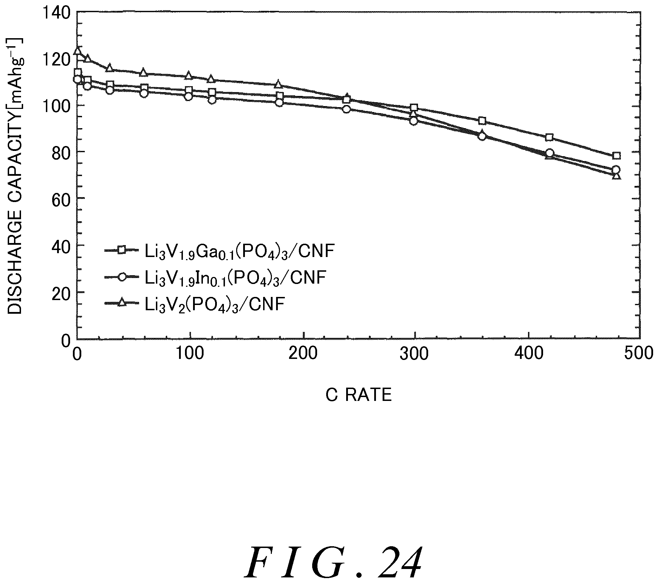

Fig. 24 shows discharge rate characteristics. Fig. 24 shows the discharge rate characteristics of the cathode material including the lithium vanadium phosphate with gallium as a solid solution, the cathode material including the lithium vanadium phosphate with indium as a solid solution, and the cathode material including the lithium vanadium phosphate.

In Fig. 24, the horizontal axis indicates the C rate and the vertical axis indicates the discharge capacity. From Fig. 24, it is understood that the discharge capacity of the cathode material including the lithium vanadium phosphate with gallium as a solid solution is lower than the discharge capacity of the cathode material including the lithium vanadium phosphate at a low C rate of 1 C. This is caused by a decrease in the theoretical capacity as a result of including a solid solution of gallium, which is not involved in the electrochemical reaction. However, at a high C rate of 480 C, the discharge capacity of the cathode material including the lithium vanadium phosphate with gallium as a solid solution is higher than that of the cathode material including the lithium vanadium phosphate. In this way, the cathode material including the lithium vanadium phosphate with gallium as a solid solution is understood to realize a high discharge capacity characteristic at a high C rate.

In the same manner, the discharge capacity of the cathode material including the lithium vanadium phosphate with indium as a solid solution is lower than the discharge capacity of the cathode material including the lithium vanadium phosphate at a low C rate of 1 C. However, at a high C rate of 480 C, the discharge capacity of the cathode material including the lithium vanadium phosphate with indium as a solid solution is higher than that of the cathode material including the lithium vanadium phosphate. In this way, the cathode material including the lithium vanadium phosphate with indium as a solid solution is understood to realize a high discharge capacity characteristic at a high C rate.

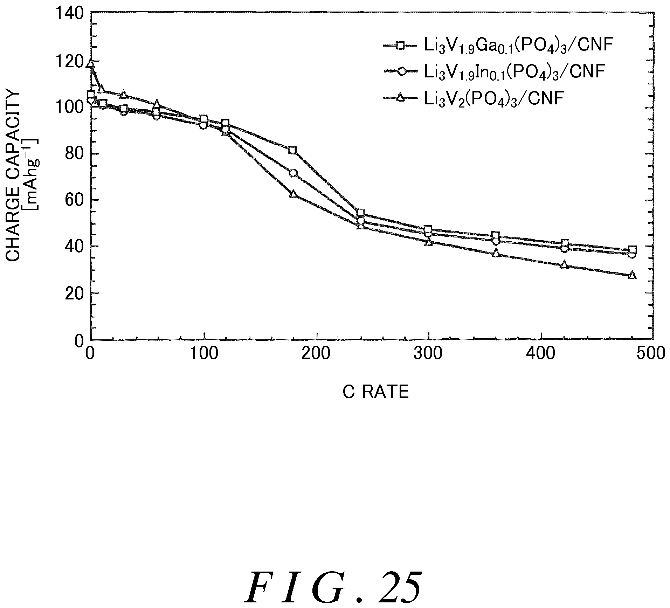

Fig. 25 shows charge rate characteristics. Fig. 25 shows the charge rate characteristics of the cathode material including the lithium vanadium phosphate with gallium as a solid solution, the cathode material including the lithium vanadium phosphate with indium as a solid solution, and the cathode material including the lithium vanadium phosphate.

In Fig. 25, the horizontal axis indicates the C rate and the vertical axis indicates the charge capacity. From Fig. 25, it is understood that the charge capacity of the cathode material including the lithium vanadium phosphate with gallium as a solid solution is lower than the charge capacity of the cathode material including the lithium vanadium phosphate at a low C rate of 1 C. However, at a high C rate of 480 C, the charge capacity of the cathode material including the lithium vanadium phosphate with gallium as a solid solution is higher than that of the cathode material including the lithium vanadium phosphate. In this way, the cathode material including the lithium vanadium phosphate with gallium as a solid solution is understood to realize a high charge capacity characteristic at a high C rate.

In the same manner, the charge capacity of the cathode material including the lithium vanadium phosphate with indium as a solid solution is lower than the charge capacity of the cathode material including the lithium vanadium phosphate at a low C rate of 1 C. However, at a high C rate of 480 C, the charge capacity of the cathode material including the lithium vanadium phosphate with indium as a solid solution is higher than that of the cathode material including the lithium vanadium phosphate. In this way, the cathode material including the lithium vanadium phosphate with indium as a solid solution is understood to realize a high charge capacity characteristic at a high C rate.

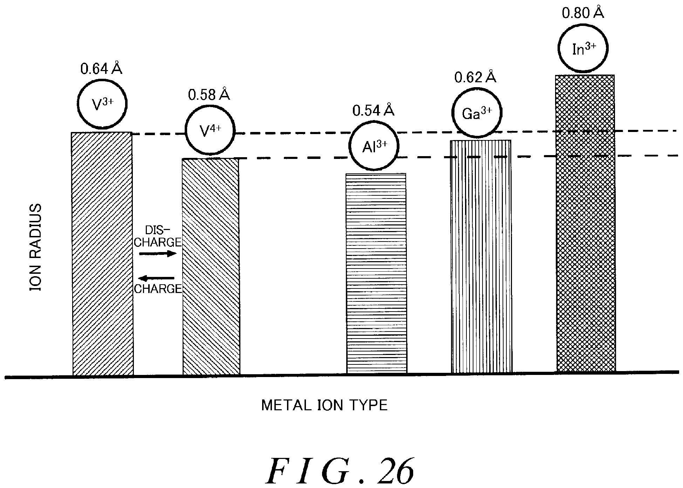

Fig. 26 is a drawing for describing the ion radius of the metal ions. In Fig. 26, the height in the bar graph indicates the size of the ion radius. In other words, a high bar graph indicates a large ion radius, and a low bar graph indicates a small ion radius.

As shown in Fig. 26, when the valence of the vanadium changes from 3 to 4 due to charging, the ion radius decreases from 0.64 to 0.58 . Furthermore, when the valence of the vanadium changes from 4 to 3 due to discharging, the ion radius increased from 0.58 to 0.64 . As a result of this change in the ion radius, the lithium vanadium phosphate crystal expands and contracts.

The ion radius of the aluminum as a solid solution in the vanadium is 0.54 . The ion radius of the gallium as a solid solution in the vanadium is 0.62 , and the ion radius of the indium as a solid solution in the vanadium is 0.80 . By forming a solid solution from any one of aluminum having a smaller ion radius than the 0.64 ion radius of the vanadium with a valence of 3, gallium having approximately the same ion radius as the vanadium with a valence of 3, and indium having a larger ion radius than the vanadium with a valence of 3, it is possible to increase the capacity characteristic at a high C rate of the cathode material including this metal by forming this metal as a solid solution in the vanadium. In other words, any one of the metals forming a solid solution in the vanadium in the present embodiment example is a metal that has a valence of 3 in the same manner as the vanadium ions and does not change its valence due to the removal and insertion of lithium ions, and it is possible to improve the capacity characteristic in a high C rate condition regardless of the size of the ion radius in these metals.

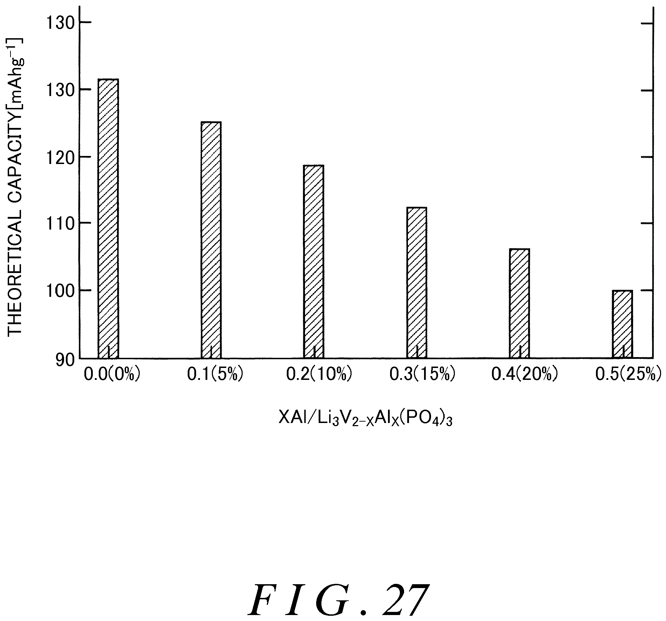

Fig. 27 is a graph showing a theoretical capacity of the lithium vanadium phosphate with aluminum as a solid solution. The aluminum is not involved in the electrochemical reaction, and therefore the theoretical capacity of the cathode material was calculated with the theoretical capacity being reduced by an amount corresponding to doping with aluminum. As shown in Fig. 27, by setting the upper limit of the aluminum solid solution amount to be less than or equal to 25%, the lithium vanadium phosphate with aluminum as a solid solution can be guaranteed to have a theoretical capacity of 100 mAhg⁻¹.

When the lithium vanadium phosphate with aluminum as a solid solution is expressed by the general formula Li₃V₍₂₋ₓ₎Alₓ(PO₄)₃, it is preferable that 0 < x ≤ 0.5. By making x greater than 0, since the lithium vanadium phosphate includes aluminum, it is possible to increase the discharge capacity characteristic at a high C rate with the pillar structure described above. On the other hand, the theoretical capacity is reduced when aluminum is included, but by making x less than or equal to 0.5, it is possible to make the upper limit of the aluminum solid solution amount less than or equal to 25%. In this way, it is possible to guarantee a theoretical capacity greater than or equal to 100 mAhg⁻¹ for the lithium vanadium phosphate with aluminum as a solid solution.

The present embodiment shows an example of lithium vanadium phosphate with aluminum or the like as a solid solution, but the aluminum or the like does not need to be a solid solution. Lithium vanadium phosphate in which the aluminum is not a solid solution is manufactured using the Pechini method in the same manner as the present embodiment example, but the aluminum nitrate serving as the aluminum source is not included.

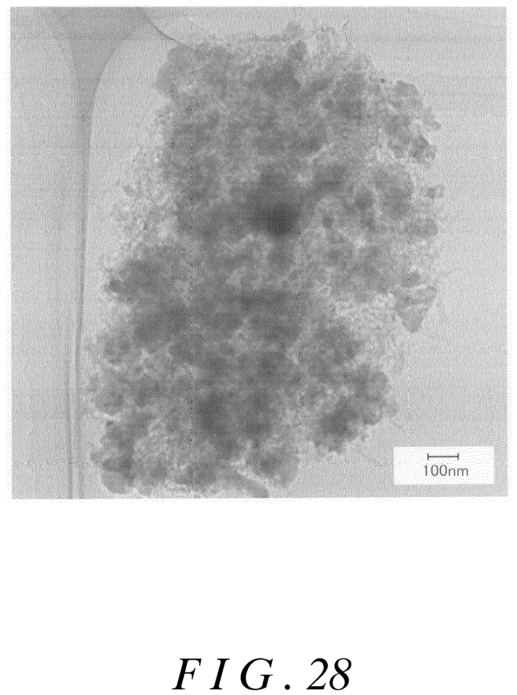

Fig. 28 is an HRTEM image of a lithium vanadium phosphate composite body in which the aluminum is not a solid solution, manufactured using the Pechini method. In Fig. 28, the black portion indicates the lithium vanadium phosphate composite body and the light gray portion indicates the CNF. As shown in Fig. 28, the lithium vanadium phosphate obtained through the manufacturing method shown in the present embodiment example is dispersed as particle-shaped crystals with a particle size from 10 nm to 200 nm that are each bonded to the CNF. In this way, the lithium vanadium phosphate composite body in which the aluminum is not a solid solution is dispersed as particle-shaped crystals with a particle size from 10 nm to 200 nm that are bonded to the CNF, and this dispersion state has high durability and high discharge capacity at a high C rate.

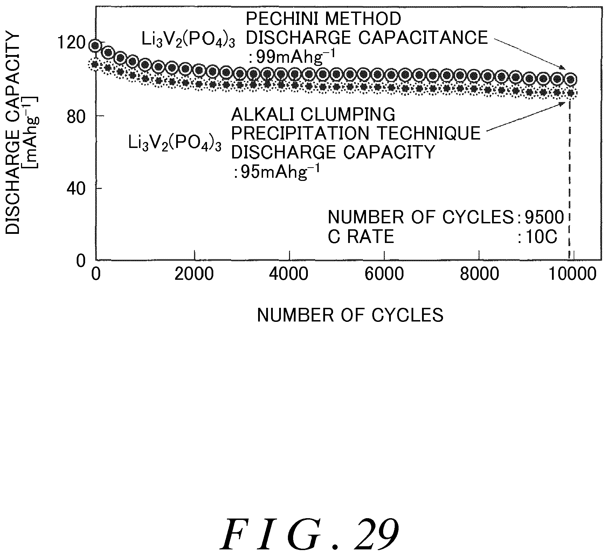

The composite material of the CNF and the lithium vanadium phosphate in which the aluminum is not a solid solution was used to form a cell according to the method shown above. The charging/discharging cycle characteristic at 10 C in this cell was examined. Fig. 29 shows the discharge cycle characteristic. Fig. 29 shows the discharge cycle characteristic of the lithium vanadium phosphate composite body in which the aluminum is not a solid solution, manufactured using the Pechini method.

As shown in Fig. 29, the cathode material formed from the lithium vanadium phosphate composite body in which particle-shaped crystals with a particle size from 10 nm to 200 nm, and manufactured using the Pechini method, was able to maintain a discharge capacity of 99 mAhg⁻¹ even after 9500 cycles of charging/discharging were performed. On the other hand, the cathode material formed from the lithium vanadium phosphate composite body manufactured using the alkali clumping precipitation technique shown in the first reference example had a discharge capacity of 95 mAhg⁻¹ after 9500 cycles of charging/discharging were performed. From these results, it was shown that it is possible to maintain a higher discharge capacity with the cathode material formed from the lithium vanadium phosphate composite body in which particle-shaped crystals with a particle size from 10 nm to 200 nm, thereby realizing excellent durability.

The alkali clumping precipitation technique shown in the first reference example damages the surface of the conductive carbon material or the VCl₃ which generates the hydrogen chloride or chlorine resulting from the dissolution of the vanadium chloride, and so it is necessary to use NaOH providing an irreversible capacity. In contrast, the manufacturing method shown in the first embodiment example does not use VCl₃, and therefore hydrogen chloride and chlorine are not generated, so that the manufacturing method is more environmentally friendly. Furthermore, since manufacturing is performed without adding NaOH, the surface of the conductive carbon material is not damaged. Therefore, it is possible to restrict the increase of the initial irreversible capacity, thereby achieving a favorable durability.

In the present embodiment example, CNF is used as the conductive carbon material. However, the conductive carbon material is not limited to CNF, and may be Ketjen black (Registered Trademark). Ketjen black (Registered Trademark) is conductive carbon black having a hollow shell structure, and is suitable as a conductive carbon material in the same manner as CNF.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### List of Reference Numerals

10: lithium secondary battery, 12: battery case (housing), 14: ion conductor, 16: separator, 18: cathode, 20: anode, 22: cathode terminal, 24: anode terminal, 26: load, 100: reaction vessel, 110: outer tube, 112: sheathing board, 114: inner wall, 120: inner tube, 122: through-hole

## Claims

1. Cathode material manufactured by a method comprising:
a first process including a step of applying shearing stress and centrifugal force inside a spinning reaction container to an aqueous solution of a mixture including a vanadium source, conductive carbon material, an organic compound having a plurality of carboxyl groups, and alcohol having a plurality of hydrogen groups, to bond vanadium oxide to a surface of the conductive carbon material; and
a second process including a step of adding a phosphate source and a lithium source to the mixture and applying shearing stress and centrifugal force to the mixture inside the spinning reaction container, to produce lithium vanadium phosphate with particle shapes bonded to the surface of the conductive carbon material, wherein
the first process further includes, after the step of bonding the vanadium oxide to the surface of the conductive carbon material:
a step of drying the mixture; and
a step of sintering the mixture, and
the second process further includes, after the step of producing the lithium vanadium phosphate with particle shapes bonded to the surface of the conductive carbon material:
a step of drying the lithium vanadium phosphate; and
a step of sintering the lithium vanadium phosphate, wherein
the cathode material comprises:
lithium vanadium phosphate including vanadium with a valence that changes between 3 and 5 due to removal and insertion of lithium ions; and
conductive carbon material;
the lithium vanadium phosphate is bonded to a surface of the conductive carbon material,
the lithium vanadium phosphate includes a metal M selected from among aluminum, gallium, and indium, the metal forms a solid solution in the lithium vanadium phosphate, the lithium vanadium phosphate including the metal is expressed by a general formula of Li₃V₂₋ₓMₓ(PO₄)₃ or LiV₂₋ₓMₓ(PO₄)₃, where 0 < x ≤ 0.5, and
90% or more of the lithium vanadium phosphate by total weight is particle-shaped crystals with diameters from 10 nm to 200 nm.

2. The cathode material according to any of the previous claims, wherein the diameter of the lithium vanadium phosphate is from 10 nm to 100 nm.

3. The cathode material according to any of the previous claims, wherein the conductive carbon material is carbon nanofiber.

4. The cathode material according to any one of the previous claims, wherein the conductive carbon material is conductive carbon black having a hollow shell structure.

5. The cathode material according to any one of the previous claims, wherein the metal is the aluminum.

6. The cathode material according to the previous claim, wherein the lithium vanadium phosphate including the aluminum is expressed by a general formula of LiV₂₋ₓAlₓ(PO₄)₃, where 0 < x ≤ 0.5.

7. A secondary battery (10) comprising a cathode (18) including the cathode material according to any one of the previous claims, an anode (20), an ion conductor (14), and a separator (16).

8. A cathode material manufacturing method comprising:
a first process including a step of applying shearing stress and centrifugal force inside a spinning reaction container to an aqueous solution of a mixture including a vanadium source, and a metal M selected from among aluminum source, gallium source, and indium source, conductive carbon material, an organic compound having a plurality of carboxyl groups, and alcohol having a plurality of hydrogen groups, to bond vanadium oxide to a surface of the conductive carbon material; and
a second process including a step of adding a phosphate source and a lithium source to the mixture and applying shearing stress and centrifugal force to the mixture inside the spinning reaction container, to produce lithium vanadium phosphate with particle shapes bonded to the surface of the conductive carbon material, the lithium vanadium phosphate including
(i) the metal being expressed by a general formula of Li₃V₂₋ₓMₓ(PO₄)₃ or LiV₂₋ₓMₓ(PO₄)₃, where 0 < x ≤ 0.5, wherein the metal forms a solid solution in the lithium vanadium phosphate,
(ii) vanadium with a valence that changes between 3 and 5 due to removal and insertion of lithium ions, and 90% or more of the lithium vanadium phosphate by total weight is particle-shaped crystals with diameters from 10 nm to 200 nm, wherein
the first process further includes, after the step of bonding the vanadium oxide to the surface of the conductive carbon material:
a step of drying the mixture; and
a step of sintering the mixture, and
the second process further includes, after the step of producing the lithium vanadium phosphate with particle shapes bonded to the surface of the conductive carbon material:
a step of drying the lithium vanadium phosphate; and
a step of sintering the lithium vanadium phosphate.

9. The cathode material manufacturing method according to the previous claim, wherein the step of drying the mixture further includes a step of evaporating:
the organic compound having the plurality of carboxyl groups;
the alcohol having the plurality of hydrogen groups; and
an organic compound produced by an ester reaction between the organic compound having the plurality of carboxyl groups and the alcohol having the plurality of hydrogen groups.

10. The cathode material manufacturing method according to any one of the previous method claims, wherein in the step of bonding the vanadium oxide to the surface of the conductive carbon material, the aluminum source is selected as the metal.

11. The cathode material manufacturing method according to any one of the previous method claims, wherein the vanadium source and the aluminum source are mixed together such that the number of moles of aluminum in the aluminum source is in a range from greater than 0 to less than or equal to 0.33 for 1 mole of vanadium in the vanadium source.

12. A secondary battery manufacturing method, comprising the cathode material manufacturing method of any one of the previous method claims.

## Patentansprüche

1. Kathodenmaterial, hergestellt durch ein Verfahren mit:
einem ersten Prozess mit einem Schritt zum Ausüben einer Scherbeanspruchung und einer Zentrifugalkraft innerhalb eines rotierenden Reaktionsbehälters auf eine wässrige Lösung einer Mischung, die eine Vanadiumquelle, leitfähiges Kohlenstoffmaterial, eine organische Verbindung mit einer Vielzahl von Carboxylgruppen und Alkohol mit einer Vielzahl von Wasserstoffgruppen enthält, zum Binden von Vanadiumoxid an eine Oberfläche des leitfähigen Kohlenstoffmaterials; und
einem zweiten Prozess mit einem Schritt zum Hinzufügen einer Phosphatquelle und einer Lithiumquelle zu dem Gemisch und Ausüben einer Scherbeanspruchung und einer Zentrifugalkraft auf das Gemisch innerhalb des rotierenden Reaktionsbehälters zum Herstellen von Lithium-Vanadium-Phosphat mit Partikelformen, die an die Oberfläche des leitfähigen Kohlenstoffmaterials gebunden sind, wobei
der erste Prozess ferner nach dem Schritt zum Binden des Vanadiumoxids an die Oberfläche des leitfähigen Kohlenstoffmaterials:
einen Schritt zum Trocknen des Gemischs; und
einen Schritt zum Sintern des Gemischs aufweist, und
der zweite Prozess ferner nach dem Schritt zum Herstellen des Lithium-Vanadium-Phosphats mit Partikelformen, die an die Oberfläche des leitfähigen Kohlenstoffmaterials gebunden sind:
einen Schritt zum Trocknen des Lithium-Vanadium-Phosphats; und
einen Schritt zum Sintern des Lithium-Vanadium-Phosphats aufweist, wobei
das Kathodenmaterial aufweist:
Lithium-Vanadium-Phosphat, das Vanadium mit einer Wertigkeit enthält, die sich aufgrund des Entfernens und Einfügens von Lithium-Ionen zwischen 3 und 5 ändert; und
leitfähiges Kohlenstoffmaterial,
wobei das Lithium-Vanadium-Phosphat an eine Oberfläche des leitfähigen Kohlenstoffmaterials gebunden ist,
das Lithium-Vanadium-Phosphat ein Metall M aufweist, das ausgewählt ist aus Aluminium, Gallium, und Indium, wobei das Metall eine feste Lösung in dem Lithium-Vanadium-Phosphat bildet, wobei das Lithium-Vanadium-Phosphat, das das Metall enthält, durch eine allgemeine Formel Li₃V₂-ₓMₓ(PO₄)₃ oder LiV₂₋ₓMₓ(PO₄)₃, dargestellt ist, wobei 0 < x ≤ 0,5 ist, und
90% oder mehr des Lithium-Vanadium-Phosphats, bezogen auf das Gesamtgewicht, partikelförmige Kristalle mit Durchmessern von 10 nm bis 200 nm sind.

2. Kathodenmaterial nach einem der vorhergehenden Ansprüche, wobei der Durchmesser des Lithium-Vanadium-Phosphats 10 nm bis 100 nm beträgt.

3. Kathodenmaterial nach einem der vorhergehenden Ansprüche, wobei das leitfähige Kohlenstoffmaterial eine Kohlenstoff-Nanofaser ist.

4. Kathodenmaterial nach einem der vorhergehenden Ansprüche, wobei das leitfähige Kohlenstoffmaterial leitfähiger Ruß mit einer hohlen Schalenstruktur ist.

5. Kathodenmaterial nach einem der vorhergehenden Ansprüche, wobei das Metall Aluminium ist.

6. Kathodenmaterial nach dem vorhergehenden Anspruch, wobei das Lithium-Vanadium-Phosphat, das das Aluminium enthält, durch eine allgemeine Formel LiV₂₋ₓAlₓ(PO₄)₃ dargestellt ist, wobei 0 < x ≤ 0,5 ist.

7. Sekundärbatterie (10) mit einer Kathode (18), die das Kathodenmaterial nach einem der vorhergehenden Ansprüche enthält, einer Anode (20), einem lonenleiter (14) und einem Separator (16).

8. Verfahren zum Herstellen eines Kathodenmaterials, mit:
einem ersten Prozess mit einem Schritt zum Ausüben einer Scherbeanspruchung und einer Zentrifugalkraft innerhalb eines rotierenden Reaktionsbehälters auf eine wässrige Lösung eines Gemischs, das eine Vanadiumquelle und ein Metall M, das ausgewählt ist aus einer Aluminiumquelle, einer Galliumquelle und einer Indiumquelle, ein leitfähiges Kohlenstoffmaterial, eine organische Verbindung mit einer Vielzahl von Carboxylgruppen und Alkohol mit einer Vielzahl von Wasserstoffgruppen enthält, zum Binden von Vanadiumoxid an eine Oberfläche des leitfähigen Kohlenstoffmaterials; und
einem zweiten Prozess mit einem Schritt zum Hinzufügen einer Phosphatquelle und einer Lithiumquelle zu dem Gemisch und Ausüben einer Scherbeanspruchung und einer Zentrifugalkraft auf das Gemisch innerhalb des rotierenden Reaktionsbehälters zum Herstellen von Lithium-Vanadium-Phosphat mit Partikelformen, die an die Oberfläche des leitfähigen Kohlenstoffmaterials gebunden sind, wobei das Lithium-Vanadium-Phosphat (i) das Metall, das durch eine allgemeine Formel Li₃V₂₋ₓMₓ(PO₄)₃ oder LiV₂₋ₓMₓ(PO₄)₃ dargestellt ist, wobei 0 < x ≤ 0,5 ist, und wobei das Metall eine feste Lösung im Lithium-Vanadium-Phosphat bildet, und (ii) Vanadium mit einer Wertigkeit aufweist, die sich aufgrund des Entfernens und Einfügens von Lithiumionen zwischen 3 und 5 ändert, und wobei 90% oder mehr des Lithium-Vanadium-Phosphats, bezogen auf das Gesamtgewicht, partikelförmige Kristalle mit Durchmessern von 10 nm bis 200 nm sind, wobei
der erste Prozess ferner nach dem Schritt zum Binden des Vanadiumoxids an die Oberfläche des leitfähigen Kohlenstoffmaterials:
einen Schritt zum Trocknen des Gemischs; und
einen Schritt zum Sintern des Gemischs aufweist, und
der zweite Prozess ferner nach dem Schritt zum Herstellen des Lithium-Vanadium-Phosphats mit Partikelformen, die an die Oberfläche des leitfähigen Kohlenstoffmaterials gebunden sind:
einen Schritt zum Trocknen des Lithium-Vanadium-Phosphats; und
einen Schritt zum Sintern des Lithium-Vanadium-Phosphats aufweist.

9. Verfahren zum Herstellen von Kathodenmaterial nach dem vorhergehenden Anspruch, wobei der Schritt zum Trocknen des Gemischs ferner einen Schritt aufweist zum Verdampfen:
der organischen Verbindung mit der Vielzahl von Carboxylgruppen;
des Alkohols mit der Vielzahl von Wasserstoffgruppen; und
einer organischen Verbindung, die durch eine Esterreaktion zwischen der organischen Verbindung mit der Vielzahl von Carboxylgruppen und dem Alkohol mit der Vielzahl von Wasserstoffgruppen erzeugt wird.

10. Verfahren zum Herstellen eines Kathodenmaterials nach einem der vorhergehenden Verfahrensansprüche, wobei in dem Schritt zum Binden des Vanadiumoxids an die Oberfläche des leitfähigen Kohlenstoffmaterials die Aluminiumquelle als das Metall ausgewählt wird.

11. Verfahren zum Herstellen von Kathodenmaterial nach einem der vorhergehenden Verfahrensansprüche, wobei die Vanadiumquelle und die Aluminiumquelle derart miteinander gemischt werden, dass die Molzahl von Aluminium in der Aluminiumquelle in einem Bereich von größer als 0 bis kleiner oder gleich 0,33 für 1 Mol Vanadium in der Vanadiumquelle liegt.

12. Verfahren zum Herstellen einer Sekundärbatterie, mit dem Verfahren zum Herstellen von Kathodenmaterial nach einem der vorhergehenden Verfahrensansprüche.

## Revendications

1. Matière de cathode fabriquée par un procédé comprenant :
une premier processus incluant une étape d'application d'une contrainte de cisaillement et d'une force centrifuge à l'intérieur d'un récipient réactionnel de filage à une solution aqueuse d'un mélange comportant une source de vanadium, une matière carbonée conductrice, un composé organique ayant une pluralité de groupes carboxyles et un alcool ayant une pluralité de groupes hydrogène, pour lier de l'oxyde de vanadium à une surface de la matière carbonée conductrice ; et
un deuxième processus incluant une étape d'addition d'une source de phosphate et d'une source de lithium au mélange et d'application d'une contrainte de cisaillement et d'une force centrifuge au mélange à l'intérieur du récipient réactionnel de filage, pour produire du phosphate de lithium et de vanadium avec des formes de particules liées à la surface de la matière carbonée conductrice, où
le premier processus inclut en outre, après l'étape de liaison de l'oxyde de vanadium à la surface de la matière carbonée conductrice,
une étape de séchage du mélange ; et
une étape de frittage du mélange ; et
le deuxième processus comporte en outre, après l'étape de production du phosphate de lithium et de vanadium avec des formes de particules liées à la surface de la matière carbonée conductrice :
une étape de séchage du phosphate de lithium et de vanadium ; et
une étape de frittage du phosphate de lithium et de vanadium, où la matière de cathode comprend :
du phosphate de lithium et de vanadium incluant du vanadium avec une valence qui varie entre 3 et 5 à cause du retrait et de l'insertion d'ions lithium ; et
de la matière carbonée conductrice ;
le phosphate de lithium et de vanadium est lié à une surface de la matière carbonée conductrice,
le phosphate de lithium et de vanadium comporte un métal M choisi parmi l'aluminium, le gallium et l'indium, le métal forme une solution solide dans le phosphate de lithium et de vanadium, le phosphate de lithium et de vanadium incluant le métal peut être exprimé par une formule générale Li₃V₂₋ₓMₓ(PO₄)₃ ou LiV₂₋ₓMₓ(PO₄)₃, où 0 < x ≤ 0,5, et 90 % ou plus de phosphate de lithium et de vanadium pour le poids total sont des cristaux de forme particulaire avec des diamètres de 10 nm à 200 nm.

2. Matière de cathode selon l'une quelconque des revendications précédentes, dans laquelle le diamètre du phosphate de lithium et de vanadium est de 10 nm 100 nm.

3. Matière de cathode selon l'une quelconque des revendications précédentes, dans laquelle la matière carbonée conductrice est de la nanofibre de carbone.

4. Matière de cathode selon l'une quelconque des revendications précédentes, dans laquelle la matière carbonée conductrice est du noir de carbone conducteur ayant une structure en coque creuse.

5. Matière de cathode selon l'une quelconque des revendications précédentes, dans laquelle le métal est l'aluminium.

6. Matière de cathode selon les revendications précédentes, dans laquelle le phosphate de lithium et de vanadium incluant l'aluminium peut être exprimé par une formule générale LiV_{2 -x}Alₓ(PO₄)₃, où 0 < x ≤ 0,5.

7. Batterie secondaire (10) comprenant une cathode (18) incluant la matière de cathode selon l'une quelconque des revendications précédentes, une anode (20) et un conducteur d'ion (14) et un séparateur (16).

8. Procédé de fabrication d'une matière de cathode comprenant :
une premier processus incluant une étape d'application d'une contrainte de cisaillement et d'une force centrifuge à l'intérieur d'un récipient réactionnel de filage à une solution aqueuse d'un mélange comportant une source de vanadium, et un métal M choisi parmi une source d'aluminium, une source de gallium et une source d'indium, une matière carbonée conductrice, un composé organique ayant une pluralité de groupes carboxyles et un alcool ayant une pluralité de groupes hydrogène, pour lier de l'oxyde de vanadium à une surface de la matière carbonée conductrice ; et
un deuxième processus incluant une étape d'addition d'une source de phosphate et d'une source de lithium au mélange et d'application d'une contrainte de cisaillement et d'une force centrifuge au mélange à l'intérieur du récipient réactionnel de filage, pour produire du phosphate de lithium et de vanadium avec des formes de particules liées à la surface de la matière carbonée conductrice, le phosphate de lithium et de vanadium comportant
(i) le métal étant exprimé par une formule générale Li₃V₂₋ₓMₓ(PO₄)₃ ou LiV₂₋ₓMₓ(PO₄)₃, où 0 < x ≤ 0,5, où le métal forme une solution solide dans le phosphate de lithium et de vanadium,
(ii) du vanadium avec une valence qui varie entre 3 et 5 à cause du retrait et de l'insertion d'ions lithium, et 90 % ou plus de phosphate de lithium et de vanadium pour le poids total sont des cristaux de forme particulaire avec des diamètres de 10 nm à 200 nm, où
le premier processus comporte en outre, après l'étape de liaison de l'oxyde de vanadium à la surface de la matière carbonée conductrice :
une étape de séchage du mélange ; et
une étape de frittage du mélange ; et
le deuxième processus comporte en outre, après l'étape de production du phosphate de lithium et de vanadium avec des formes de particules liées à la surface de la matière carbonée conductrice :
une étape de séchage du phosphate de lithium et de vanadium ; et
une étape de frittage du phosphate de lithium et de vanadium.

9. Procédé de fabrication d'une matière de cathode selon la revendication précédente, dans lequel l'étape de séchage du mélange comporte en outre une étape d'évaporation :
du composé organique ayant la pluralité de groupes carboxyles ;
de l'alcool ayant la pluralité de groupes hydrogène ; et
d'un composé organique produit par une réaction d'estérification entre le composé organique ayant la pluralité de groupes carboxyles et l'alcool ayant la pluralité de groupes hydrogène.

10. Procédé de fabrication d'une matière de cathode selon l'une quelconque des revendications précédentes, dans lequel, dans l'étape de liaison de l'oxyde de vanadium à la surface de la matière carbonée conductrice, la source d'aluminium est choisie en tant que métal.

11. Procédé de fabrication d'une matière de cathode selon l'une quelconque des revendications précédentes, dans lequel la source de vanadium et la source d'aluminium sont mélangées l'une à l'autre de sorte que le nombre de moles d'aluminium dans la source d'aluminium est dans une plage supérieure à 0 à inférieure ou égale à 0,33 pour 1 mole de vanadium dans la source de vanadium.

12. Procédé de fabrication d'une batterie secondaire, comprenant le procédé de fabrication de la matière de cathode selon l'une quelconque des revendications de procédé précédentes.
